# EUROPÄISCHE PATENTSCHRIFT

(11) **EP 3 370 935 B1**
(45) Veröffentlichungstag und Bekanntmachung des Hinweises auf die Patenterteilung: **07.06.2023**
(21) Anmeldenummer: 16797796.6
(22) Anmeldetag: 08.11.2016
(51) Int. Cl.: B29C 33/34, B29C 33/36, B29C 41/06, B29C 41/34, B29C 41/38, B29C 41/46, B29C 41/52, B29C 31/00

(54) **VERFAHREN UND ANLAGE ZUM HERSTELLEN VON ROTATIONSGUSSPRODUKTEN**
METHOD AND APPARATUS FOR MANUFACTURING ROTATIONALLY MOULDED PRODUCTS
PROCÉDÉ ET APPAREIL POUR FABRIQUER UN ARTICLE MOULÉ PAR ROTATION

(30) Priorität: 09.11.2015 DE 102015119203
(43) Veröffentlichungstag der Anmeldung: 12.09.2018
(73) Patentinhaber: ROTO evolution GmbH, 08451 Crimmitschau (DE)
(72) Erfinder: NAUMANN, Frank, 04626 Vollmershain (DE); PEUKER, Tino, 08459 Neukirchen/Pleiße (DE)
(74) Vertreter: Hoffmann, Jürgen
(86) Internationale Anmeldenummer: PCT/EP2016/077020
(87) Internationale Veröffentlichungsnummer: WO 2017/081030

(56) Entgegenhaltungen:
- EP-A1- 2 093 038
- EP-A1- 2 918 386
- WO-A2-2014/000727
- US-A- 2 946 092
- US-A- 3 704 084
- US-B1- 6 555 037

## Beschreibung

Die Erfindung betrifft ein Verfahren zum Herstellen von Rotationsgussprodukten.

Die Erfindung betrifft außerdem eine Anlage zum Ausführen eines solchen Verfahrens und insbesondere eine Anlage zum Herstellen von Rotationsgussprodukten, die mehrere kugelförmige Aufnahmekörper jeweils ohne eigenen Rotationsantrieb beinhaltet, von denen jeder zumindest eine mit Rohmaterial beschickbare Gussform aufweist.

Um Rotationsguss-Formkörper aus Kunststoffen herstellen zu können, ist es erforderlich, eine mit Rohmaterial beschickte Gussform zu rotieren und dabei auf eine derart hohe Temperatur zu heizen, dass das zumeist pulverförmige oder granulatförmige, insbesondere mikrogranulatförmige, Rohmaterial während des Rotationsprozesses schmilzt und sich an der Innenwandung der Gussform anlagert. Die Rotationsbewegung darf hierbei nicht ausschließlich um eine einzige Rotationsachse erfolgen; vielmehr ist es erforderlich, die Gussform in mindestens zwei Dimensionen zu rotieren.

Aus WO 2014/000 727 A2 ist eine Rotationsvorrichtung für Rotationsguss-Formkörper bekannt, die eine kugelförmige Aufnahmevorrichtung für wenigstens eine Gussform, eine Haltevorrichtung für die kugelförmige Aufnahmevorrichtung und eine Antriebseinheit zum Bewirken der Rotationsbewegung aufweist. Die kugelförmige Aufnahmevorrichtung besteht aus zwei Teilen und kann in einer Trennebene geöffnet werden, um die Gussform zu beschicken oder um den fertigen Rotationsgussformkörper aus der Gussform entnehmen zu können.

Aus US 3,704,084 ist eine Rotationsgussvorrichtung bekannt, bei der eine Vielzahl von kugelförmigen Aufnahmekörpern ähnlich wie bei einem Fließband stetig und eine nach der anderen zeitlich nach der Beschickung zunächst durch einen Durchlaufofen und anschließend durch eine Kühlkammer gefördert werden. Die kugelförmigen Aufnahmekörper laufen hierbei auf zwei zueinander parallelen rotierenden Wellen, die die kugelförmigen Aufnahmekörper in Rotation versetzen.

Diese Vorrichtung hat den Nachteil, dass sämtliche kugelförmigen Aufnahmekörper in gleicher Weise rotiert, beheizt und abgekühlt werden. Daher ist es mit einer solchen Vorrichtung in der Praxis nicht möglich, zeitlich parallel unterschiedlichartige Rotationsgussprodukte, beispielsweise unterschiedlich große Rotationsgussprodukte, und/oder Rotationsgussprodukte aus unterschiedlichen Rohmaterialien, beispielsweise unterschiedlichen Kunststoffen, herzustellen, weil diese unterschiedliche Anforderungen an die Herstellparameter stellen. Derartigen Anforderungen kann die aus dem Stand der Technik bekannte Vorrichtung nicht genügen.

Außerdem ist es nicht möglich, eine solche Vorrichtung hinsichtlich der Verarbeitungskapazität zu verkleinern oder zu vergrößern, beispielsweise um die Vorrichtung in ihrer Produktionskapazität an wechselnde Auftragslagen anzupassen. Daher ist die aus dem Stand der Technik bekannte Vorrichtung nur dann rentabel einsetzbar, wenn sie stets unter maximal möglicher Auslastung betrieben wird.

Auch aus DE 197 02 469 A1 ist eine Rotationsformanlage mit in Reihe hintereinander angeordneten Bearbeitungsstationen, nämlich mit einem Sinterofen, einer dem Sinterofen nachgeschalteten Kühlkammer und mit einer der Kühlkammer nachgeordneten Entformstation bekannt.

Aus DE 72 13 361 U ist eine Formmaschine für Kunstharzgegenstände bekannt. Bei dieser Maschine werden Wagen mit rotierend angetriebenen Formen nacheinander auf Schienen durch einen Rohmaterialeinfüllabschnitt, einen Erwärmungsabschnitt und einen Abkühlabschnitt gefahren. Jeder der Wagen weist einen eigenen Rotationsantrieb auf.

Aus EP 0 1 77 906 A2 ist eine Anordnung einer Rotationsvorrichtung mit einer Manipulationsstation, mit einer einzigen Heizkammer und drei Kühlkammern bekannt. Die Kühlkammern sind kreisförmig um die Heizkammer angeordnet. In die Heizkammer und jede der Kühlkammern kann jeweils ein als Wagen ausgebildeter Werkzeugträger eingefahren werden. Ein solcher Wagen trägt jeweils eine Antriebseinheit, mit der ein rotierbares Werkzeug zur Doppelrotation um zwei senkrecht zueinander stehende Achsen angetrieben wird. Diese Anordnung einer Rotationsvorrichtung ist nachteiliger Weise sehr aufwendig zu betreiben. Insbesondere ist zum Betreiben ein großer Energieaufwand erforderlich.

Aus US 6,555,037 B1 ist eine Vorrichtung bekannt, die einen Trägerteil und einen Gussteil aufweist. Als Gussteil wird ein im Wesentlichen kugelförmiges Gestell verwendet, in dem eine Gussform angeordnet ist. Das Gestell hat umlaufende, endlose Furchen, in denen motorisch angetriebene Antriebsräder des Trägerteils abrollen können, um das Gestell in Rotation zu versetzen.

Aus EP 2 918 386 A1 ist ein Kugelrotationsverfahren zum Herstellen von Rotationsguss-Formkörpern bekannt, bei dem eine kugelförmige Aufnahmevorrichtung rotiert wird, in der sich zumindest eine mit Ausgangsmaterial beschickte Gussnegativform befindet. Das Kugelrotationsverfahren zeichnet sich dadurch aus, dass die kugelförmige Aufnahmevorrichtung zumindest teilweise elektrisch leitend ausgebildet ist und dass während des Rotationsvorganges elektrische Energie derart durch die kugelförmige Aufnahmevorrichtung geleitet wird, dass durch die kugelförmige Aufnahmevorrichtung ein elektrischer Strom fließt.

Aus EP 2 093 038 A1 ist eine Rotationsformanlage mit wenigstens einem Sinterofen, zwei Kühlkammern und einer Entformstation bekannt. Mittels eines zentral angeordneten Manipulators sind diese ortsfest angeordneten Baugruppen mit Formrahmen beschickbar. Zu diesem Zweck ist der Manipulator mit radial verfahrbaren, die Formrahmen tragenden Armen ausgestattet. Die Arme sind an einem um die vertikale Achse verdrehbaren Ständer vorgesehen. Der Manipulator, der Sinterofen sowie die Kühlkammern weisen eigene Drehvorrichtungen auf, an welche die Formrahmen jeweils ankoppelbar sind.

Aus US 2 946 092 ist eine Vorrichtung zum Verteilen einer flüssigen Füllung in einer Form bekannt. Die Vorrichtung weist ein Paar gegenüberliegender Antriebsplatten, Mittel zum Rotieren der Antriebsplatten mit unterschiedlichen Geschwindigkeiten in Bezug auf eine gemeinsame Achse senkrecht zu den Flächen der Antriebsplatten, und ein kugelförmiges Element, das zwischen den Antriebsplatten angeordnet ist, auf. Durch die Rotation der Antriebsplatten wird das kugelförmige Element seinerseits in Drehung und Rotation versetzt.

Es ist daher die Aufgabe der vorliegenden Erfindung, ein Verfahren zum Herstellen von Rotationsgussprodukten anzugeben, das flexibel an die jeweiligen Produktionsanforderungen anpassbar ist.

Die Aufgabe wird durch ein Verfahren gelöst, das gekennzeichnet ist durch
das gleichzeitige Verwenden mehrerer, kugelförmiger Aufnahmekörper jeweils ohne eigenen Rotationsantrieb, von denen jeder zumindest eine mit Rohmaterial beschickbare Gussform beinhaltet, und durch das gleichzeitige Verwenden mehrerer Bearbeitungsvorrichtungen, die unabhängig voneinander betrieben werden, jeweils zum Ausführen wenigstens eines von mehreren Herstellungsschritten mit jeweils einem der kugelförmigen Aufnahmekörper, wobei die mit jedem der kugelförmigen Aufnahmekörper auszuführenden Herstellungsschritte beinhalten:
   i. Beschicken wenigstens der Gussform mit einem Rohmaterial, in einer Bearbeitungsvorrichtung, die als Beschickungsstation ausgebildet ist,
   ii. Heizen des Aufnahmekörpers oder wenigstens der Gussform des Aufnahmekörpers, während der Aufnahmekörper rotiert wird, in einer Bearbeitungsvorrichtung, die als Rotationsstation (3) ausgebildet ist,
   iii. Kühlen des Aufnahmekörpers oder wenigstens der Gussform in einer Bearbeitungsvorrichtung, die als Kühlstation ausgebildet ist,
   iv. Entnehmen des Rotationsgussproduktes aus der Gussform, in einer Bearbeitungsvorrichtung, die als Entnahmestation ausgebildet ist und wobei
mehrere Bearbeitungsvorrichtungen zeitlich parallel oder zeitlich überlappend verwendet werden, die als Rotationsstationen ausgebildet sind,
und wobei jeweils der Bearbeitungsvorrichtung, die gerade einen Herstellungsschritt abgeschlossen hat, der kugelförmige Aufnahmekörper samt seinem Inhalt und ohne Rotationsantrieb entnommen wird und danach einer beliebigen für den jeweils nächsten der Herstellungsschritte i bis iv geeigneten und gerade freien Bearbeitungsvorrichtung zugeführt wird.

Es ist eine weitere Aufgabe der vorliegenden Erfindung, eine Anlage zum Herstellen von Rotationsgussprodukten anzugeben, die flexibel an die jeweiligen Produktionsanforderungen anpassbar ist.

Diese Aufgabe wird durch eine Anlage gelöst, die gekennzeichnet ist durch,
a. mehrere unabhängig voneinander betreibbare und unabhängig voneinander arbeitende, insbesondere auf zwei unterschiedliche horizontale Ebenen verteilte, Bearbeitungsvorrichtungen, wobei jede Bearbeitungsvorrichtung dazu ausgebildet ist, zumindest einen der nachfolgenden Herstellungsschritte a bis d auszuführen:
   i. Beschicken wenigstens der Gussform mit einem Rohmaterial, in einer Bearbeitungsvorrichtung, die als Beschickungsstation ausgebildet ist,
   ii. Heizen des Aufnahmekörpers oder wenigstens der Gussform des Aufnahmekörpers, während der Aufnahmekörper rotiert wird, in einer Bearbeitungsvorrichtung, die als Rotationsstation ausgebildet ist,
   iii. Kühlen des Aufnahmekörpers oder wenigstens der Gussform in einer Bearbeitungsvorrichtung, die als Kühlstation ausgebildet ist,
   iv. Entnehmen des Rotationsgussproduktes aus der Gussform, in einer Bearbeitungsvorrichtung, die als Entnahmestation ausgebildet ist und
   wobei mehrere Bearbeitungsvorrichtungen zeitlich parallel oder zeitlich überlappend arbeiten, die als Rotationsstationen ausgebildet sind,
b. und einen Förderer, der die kugelförmigen Aufnahmekörper(1), jeweils samt Inhalt und jeweils ohne Rotationsantrieb, voneinander unabhängig und unmittelbar, den Bearbeitungsvorrichtungen zuführt und jeweils nach einem Bearbeitungsvorgang von den Bearbeitungsvorrichtungen empfängt, wobei durch den Förderer jeweils der Bearbeitungsvorrichtung, die gerade einen Herstellungsschritt abgeschlossen hat, der kugelförmige Aufnahmekörper samt seinem Inhalt und ohne Rotationsantrieb entnommen wird und danach einer beliebigen für den jeweils nächsten der Herstellungsschritte i bis iv geeigneten und gerade freien Bearbeitungsvorrichtung zugeführt wird.

Die Erfindung hat den ganz besonderen Vorteil, dass zeitlich parallel unterschiedlichartige Rotationsgussprodukte, insbesondere unterschiedlich große und/oder unterschiedlich schwere und/oder unterschiedlich geformte Rotationsgussprodukte, und/oder Rotationsgussprodukte aus unterschiedlichartigen Rohmaterialien, insbesondere aus unterschiedlichen Rohmaterialien, die unterschiedliche Bearbeitungsparameter erfordern, hergestellt werden können. Dies wird insbesondere durch die Verwendung mehrerer Bearbeitungsvorrichtungen erreicht, die unabhängig voneinander betrieben werden.

Wie weiter unten noch im Detail erläutert wird ist es beispielsweise möglich, einen kugelförmigen Aufnahmekörper, der eine erste Art von Gussform beinhaltet, zeitlich länger oder bei einer anderen Temperatur zu rotieren, als einen anderen kugelförmigen Aufnahmekörper, mit einer anderen Gussform, der insbesondere zeitlich parallel oder zeitlich überlappend, in einer anderen Bearbeitungsvorrichtung rotiert und ggf. beheizt wird. Wie ebenfalls weiter unten noch im Detail erläutert wird, ermöglicht es die Erfindung, jedes Rotationsgussprodukt ganz spezifisch mit den speziell für dieses Rotationsgussprodukt optimierten Herstellparametern, insbesondere hinsichtlich Rotationsbewegung, Rotationsdauer, Heiztemperatur oder Abkühltemperatur, herzustellen, wobei es vorteilhaft auch möglich ist, für unterschiedliche Rotationsgussprodukte unterschiedlichartige Ausgangsmaterialien, beispielsweise Kunststoffe die unterschiedliche Schmelztemperaturen aufweisen, zu verwenden.

Die erfindungsgemäße Anlage zum Herstellen von Rotationsgussprodukten hat außerdem den ganz besonderen Vorteil, dass sie sehr energieeffizient arbeitet. Dies insbesondere deshalb, weil jeweils ausschließlich ein kugelförmige Aufnahmekörper samt seinem Inhalt, aber insbesondere ohne einen Rotationsantrieb, in die einzelnen Bearbeitungsvorrichtungen überführt und dort geheizt oder gekühlt wird. Ein ständig abwechselndes und energieintensives Aufheizen und Abkühlen von Rotationsantrieben ist somit wirkungsvoll vermieden. Insoweit ist bei einer vorteilhaften Ausführung vorgesehen, dass mehrere der Bearbeitungsvorrichtungen jeweils einen eigenen Rotationsantrieb zum Rotieren jeweils eines Aufnahmekörpers aufweisen, und/oder dass sämtliche Bearbeitungsvorrichtungen jeweils einen eigenen Rotationsantrieb zum Rotieren jeweils eines Aufnahmekörpers aufweisen. Es ist daher vorteilhaft vermieden, jedem Aufnahmekörper eine eigene Antriebseinheit zuzuordnen und jeweils zusammen mit dem Aufnahmekörper von Bearbeitungsvorrichtung zu Bearbeitungsvorrichtung transportieren zu müssen.

Die erfindungsgemäße Anlage zum Herstellen von Rotationsgussprodukten hat darüber hinaus den ganz besonderen Vorteil, dass sie nahezu beliebig erweitert oder verkleinert werden kann. Zum Erweitern einer solchen Anlage ist es im Wesentlichen lediglich erforderlich, weitere Bearbeitungsvorrichtungen hinzuzufügen und dafür zu sorgen, dass der Förderer kugelförmige Aufnahmekörper an diese übergeben kann, wenn sie gerade frei sind bzw. Aufnahmekörper von diesen entnehmen kann, wenn der jeweilige Bearbeitungsschritt abgeschlossen ist. Analog ist es natürlich auch möglich, die Anlage durch Entfernen oder einfach durch Abschalten einzelner Bearbeitungsvorrichtungen zu verkleinern. Bei einer besonderen Ausführung ist es hierbei lediglich notwendig, der Steuerungsvorrichtung, die den Förderer steuert, mitzuteilen, welche der Bearbeitungsvorrichtungen entfernt wurden, damit diese nicht mehr bedient werden. Beispielsweise ist es möglich, die Anlage derart zu verkleinern, dass sie lediglich noch eine einzige Rotationsvorrichtung und eine einzige Kühlvorrichtung, sowie eine kombinierte Beschickungs- und Entnahmestation aufweist, die alle von dem Förderer bedient werden.

Die Erfindung hat, nach einem eigenständigen Erfindungsgedanken, den ganz besonderen Vorteil, dass eine Anlage zum Herstellen von Rotationsprodukten baukastenartig aus separat betreibbaren Bearbeitungsvorrichtungen individuell für die jeweiligen Produktionsanforderungen einer Produktionsserie zusammengestellt werden kann. Hierbei kann insbesondere auch vorgesehen sein, dass wenigstens eine der Bearbeitungsvorrichtungen, insbesondere alle der Bearbeitungsvorrichtungen, auch einzeln und separat von einer erfindungsgemäßen Anlage für sich alleine betrieben werden können. Insbesondere kann eine solche Bearbeitungsvorrichtung gleichzeitig als Rotationsstation und als Kühlstation und optional auch als Beschickungsstation und als Entnahmestation fungieren. Durch das Kombinieren mehrerer derartiger Bearbeitungsvorrichtungen und das Vernetzen mit einem Förderer, insbesondere so wie es weiter unten noch im Detail beschrieben ist, kann individuell eine erfindungsgemäße Anlage zum Herstellen von Rotationsgussprodukten anforderungsspezifisch zusammengestellt werden.

Die kugelförmige Ausbildung der Aufnahmekörper hat den besonderen Vorteil, dass die Aufnahmekörper auf einfache und effiziente Weise rotiert und transportiert werden können. Beispielsweise kann eine Rotationsstation mehrere Führungslager, insbesondere Rollenlager, aufweisen, die eine Arbeitsposition zum rotierbaren Lagern eines kugelförmigen Aufnahmekörpers definieren. Mittels einer Antriebsvorrichtung, die beispielsweise mit einem auf der Oberfläche des Aufnahmekörpers abrollenden Antriebsrades ein Drehmoment auf den Aufnahmekörper überträgt, kann ein kugelförmiger Aufnahmekörper um seinen Mittelpunkt um eine unendlich große Anzahl von Achsen rotiert werden. Kugelförmige Aufnahmekörper können darüber hinaus vorteilhaft rollend, beispielsweise auf zwei parallelen Führungsschienen rollend, befördert werden.

Die kugelförmige Ausbildung der Aufnahmekörper hat den weiteren, besonderen Vorteil, dass keine zusätzliche Kupplung, bei beispielsweise eine Bajonettkupplung, zum Ankoppeln eines Aufnahmekörper an den Rotationsantrieb der jeweiligen Bearbeitungsvorrichtung erforderlich ist. Vielmehr ist es ausreichend, den jeweiligen kugelförmigen Aufnahmekörper, beispielsweise mittels geeignet angeordneter Rollen, rotierbar in einer Bearbeitungsstation zu lagern und, insbesondere reibschlüssig, mit einem oder mehreren Antriebsrädern in Kontakt zu bringen.

In vorteilhafter weise kann vorgesehen sein, dass wenigstens einer der Aufnahmekörper, insbesondere jeder der Aufnahmekörper, wenigstens eine Aufnahme für wenigstens eine Gussform aufweist. Eine solche Ausführung hat den besonderen Vorteil, dass die Gussformen einfach ausgetauscht werden können, beispielsweise wenn nach einem Produktionsprozess eines Rotationsproduktes ein anderes Rotationsprodukt hergestellt werden soll. Es ist alternativ beispielsweise auch möglich, dass ein Aufnahmekörper ausschließlich aus einer Gussform besteht und/oder unlösbar mit der Gussform verbunden ist.

Erfindungsgemäß wird mit jeder der Bearbeitungsvorrichtungen jeweils wenigstens einer der folgenden Herstellungsschritte ausgeführt: Beschicken wenigstens einer Gussform eines Aufnahmekörpers mit einem Rohmaterial, in einer Bearbeitungsvorrichtung, die als Beschickungsstation ausgebildet ist, Heizen des Aufnahmekörpers und/oder wenigstens der Gussform des Aufnahmekörpers, während der Aufnahmekörper rotiert wird, in einer Bearbeitungsvorrichtung, die als Rotationsstation ausgebildet ist, Kühlen des Aufnahmekörpers und/oder wenigstens der Gussform in einer Bearbeitungsvorrichtung, die als Kühlstation ausgebildet ist, Entnehmen des Rotationsgussproduktes aus der Gussform, insbesondere in einer Bearbeitungsvorrichtung, die als Entnahmestation ausgebildet ist, Rotieren des Aufnahmekörpers in einer Bearbeitungsvorrichtung, die als Rotationsstation ausgebildet ist.

Wie weiter unten noch im Detail erläutert wird, können das erfindungsgemäße Verfahren und die erfindungsgemäße Anlage insbesondere dazu verwendet werden, Rotationsgussprodukte im Heißrotationsverfahren, beispielsweise unter Verwendung von thermoplastischen Kunststoffen als Rohmaterial, herzustellen. Hierbei kann vorteilhaft vorgesehen sein, dass der Aufnahmekörper oder wenigstens dessen wenigstens eine Gussform, insbesondere während des Rotierens, mit Heizenergie beaufschlagt wird. Es ist allerdings auch möglich, das erfindungsgemäße Verfahren und die erfindungsgemäße Anlage zum Herstellen von Rotationsgussprodukten im Kaltrotationsverfahren unter Verwendung von kalthärtenden Materialien, wie beispielsweise Harzen oder Beton, zu verwenden. Zum Herstellen von Rotationsgussprodukten im Kaltrotationsverfahren ist es nicht notwendig, den Aufnahmekörper zu beheizen. Insoweit ist beim Herstellen von Rotationsgussprodukten im Kaltrotationsverfahren keine Bearbeitungsvorrichtung notwendig, die als Kühlstation ausgebildet ist. Allerdings kann vorteilhaft eine Bearbeitungsvorrichtung als Pufferstation fungieren, die einen Aufnahmekörper nach einem Rotationsvorgang vorübergehend aufnehmen kann. Insbesondere kann eine Bearbeitungsvorrichtung, die bei Verwendung von heißschmelzendem Rohmaterial als Kühlstation fungiert, als Pufferstation verwendet werden, wenn die Anlage einmal im Kaltrotationsverfahren betrieben wird. Die nachfolgende Beschreibung der Erfindung, auch wenn sie sich an einigen Stellen beispielhaft auf eine Heißrotation bezieht, gilt insoweit ganz allgemein und analog auch für das Herstellen von Rotationsgussprodukten im Kaltrotationsverfahren.

Erfindungsgemäß werden mehrere Bearbeitungsvorrichtungen, die als Rotationstationen ausgebildet sind, zeitlich parallel oder zeitlich überlappend verwendet. Der Förderer kann beispielsweise einen ersten kugelförmigen, Aufnahmekörper dessen Gussform bereits beschickt wurde, an eine erste Rotationsstation übergeben, während gleichzeitig die Gussform eines zweiten kugelförmigen Aufnahmekörpers beschickt wird, so dass der Förderer anschießend, nachdem er den ersten Aufnahmekörper an die erste Rotationsstation übergeben hat, den zweiten Aufnahmekörper, beispielsweise von einer Beschickungsstation entnehmen und an eine zweite Rotationsstation übergeben kann.

Zusätzlich kann vorteilhaft auch vorgesehen sein, dass mehrere Bearbeitungsvorrichtungen, die als Kühlstationen ausgebildet sind, zeitlich parallel oder zeitlich überlappend verwendet werden. Beispielsweise kann der Förderer einen ersten kugelförmigen Aufnahmekörper dessen Rotations- und Heizvorgang abgeschlossen ist, der betreffenden Rotationsstation entnehmen und an eine erste Kühlstation übergeben, während bereits in einer anderen Kühlstation zeitlich parallel ein anderer Aufnahmekörper oder wenigstens dessen Gussform gekühlt wird.

In analoger Weise kann vorteilhaft vorgesehen sein, dass mehrere Bearbeitungstationen, die als Beschickungsstationen ausgebildet sind, zeitlich parallel oder zeitlich überlappend verwendet werden und/oder dass mehrere Bearbeitungsvorrichtungen, die als Entnahmestationen ausgebildet sind, zeitlich parallel oder zeitlich überlappend verwendet werden. Allerdings ist es in der Praxis so, dass weniger Beschickungsstationen und Entnahmestationen benötigt werden, als Rotationsstationen und Kühlstationen, weil das Beschicken der Gussform und das Entnehmen des fertigen Rotationsgussprodukts aus der Gussform in aller Regel weniger Zeit beansprucht, als der Rotationsvorgang einschließlich dem Beheizen und als der Kühlvorgang. Insbesondere kann es für kleinere Anlagen durchaus ausreichend sein, wenn eine einzige Bearbeitungsvorrichtung sowohl als Beschickungsstation als auch als Entnahmestation fungiert, während darüber hinaus mehrere Rotationsstationen und mehrere Kühlstationen zur Anlage gehören und betrieben werden.

Bei einer besonderen Ausführung sind die Bearbeitungsstationen, insbesondere unterschiedliche Bearbeitungsstationen für aufeinanderfolgende Herstellungsschritte, nicht hintereinander in Reihe angeordnet; jedoch ist auch eine solche Anordnung grundsätzlich möglich.

Wie bereits erwähnt, kann vorteilhaft vorgesehen sein, dass die einzelnen Schritte des Beschickens mit Rohmaterial, des Rotierens und Heizens, des Abkühlens und des Entnehmens des fertigen Rotationsgussproduktes zeitlich überlappend und/oder sich zyklisch wiederholend mit einer Vielzahl von kugelförmigen Aufnahmekörpern durchgeführt werden. Insbesondere kann beispielsweise ein erster Aufnahmekörper gerade mit neuem Rohmaterial beschickt werden, während ein zweiter Aufnahmekörper in einer Rotationsstation bereits beheizt und rotiert wird und während ein dritter Aufnahmekörper gerade in einer Abkühlstation, insbesondere bei gleichzeitiger Ausführung einer Rotationsbewegung, abkühlt. Sobald die Gussform des ersten Aufnahmekörpers bzw. die mehreren Gussformen des ersten Aufnahmekörpers beschickt sind, kann dieser, insbesondere automatisch gesteuert, an eine weitere, gerade freie Rotationsstation mittels des Förderers transportiert werden, ohne dass die Bearbeitungsvorgänge in den anderen Bearbeitungsvorrichtungen hierdurch beeinflusst werden. Insbesondere kann der erste Aufnahmekörper unmittelbar und ohne Umweg über eine weitere Bearbeitungsvorrichtung der freien Rotationsstation zugeführt werden.

Insbesondere kann analog vorteilhaft vorgesehen sein, dass immer wenn ein Bearbeitungsvorgang bei einer der Bearbeitungsvorrichtungen abgeschlossen ist, der jeweilige kugelförmige Aufnahmekörper dieser Bearbeitungsvorrichtung entnommen und, vorzugsweise unmittelbar, an eine gerade freie Bearbeitungsvorrichtung überführt wird, die in der Lage ist, den nächsten erforderlichen Bearbeitungsschritt durchzuführen. Auf diese Weise ist vorteilhaft erreicht, dass sich der gesamte Produktionsprozess nicht nach dem Aufnahmekörper mit der Gussform richtet, die die längsten Bearbeitungszeiten aufweist, wie dies bei einer stetigen Förderung der Aufnahmekörper, wie sie aus dem Stand der Technik bekannt ist, der Fall wäre. Vielmehr ist es in ganz besonders vorteilhafter Weise möglich, dass ein kugelförmiger Aufnahmekörper während des Produktionsprozesses einen anderen kugelförmigen Aufnahmekörper überholt. Insbesondere kann vorteilhaft vorgesehen sein, dass während ein kugelförmiger Aufnahmekörper gerade in einer Bearbeitungsvorrichtung bearbeitet wird, andere kugelförmige Aufnahmekörper anderen Bearbeitungsvorrichtungen zugeführt und/oder anderen Bearbeitungsvorrichtungen entnommen werden, und/oder andere kugelförmige Aufnahmekörper in anderen Bearbeitungsvorrichtungen bearbeitet werden.

Bei einer besonderen Ausführungsform kommt eine Rotationsstation zum Einsatz, die ausschließlich als Rotationsstation verwendet wird. Alternativ oder zusätzlich kann auch vorgesehen sein, dass wenigstens eine Kühlstation ausschließlich als Kühlstation verwendet wird. Insbesondere kann vorteilhaft vorgesehen sein, dass eine Anlage zum Herstellen von Rotationsgussprodukten mehrere Rotationsstationen aufweist, die ausschließlich als Rotationsstationen (insbesondere als Rotationsstationen, bei denen während des Rotierens gleichzeitig ein Heizen erfolgt) fungieren und darüber hinaus mehrere Kühlstationen aufweist, die ausschließlich als Kühlstationen fungieren. Eine solche Ausführung hat den besonderen Vorteil, dass die einzelnen Bearbeitungsvorrichtungen als spezialisierte Bearbeitungsvorrichtungen konstruktiv einfacher aufgebaut sein können. Vorzugsweise erfolgt das Abkühlen in der Kühlstation unter gleichzeitiger Rotation des kugelförmigen Aufnahmekörpers. Insoweit weisen die Kühlvorrichtungen vorzugsweise eine Vorrichtung zum Rotieren der abzukühlenden kugelförmigen Aufnahmekörper auf. Eine Rotation während des Abkühlens gewährleistet, dass das Rohmaterial bis zum Erreichen einer ausreichenden Festigkeit in der gewünschten Form gehalten wird.

Alternativ kann allerdings auch vorgesehen sein, dass eine Rotationsstation zusätzlich auch dazu ausgebildet ist, als Kühlstation zu fungieren und als Kühlstation genutzt wird, wenn gerade eine freie Kühlstation benötigt wird. Analog kann alternativ oder zusätzlich auch vorgesehen sein, dass eine Kühlstation zusätzlich dazu ausgebildet ist, als Rotationsstation zu fungieren und als Rotationsstation genutzt wird, wenn gerade eine freie Rotationsstation benötigt wird. Ebenso kann in analoger Weise - alternativ oder zusätzlich - vorgesehen sein, dass eine Beschickungsstation zusätzlich auch dazu ausgebildet ist, als Entnahmestation zu fungieren und als Entnahmestation genutzt wird, wenn nach einem Abkühlschnitt eine freie Entnahmestation benötigt wird und/oder dass eine Entnahmestation zusätzlich auch dazu ausgebildet ist, als Beschickungsstation zu fungieren und als Beschickungsstation genutzt wird, wenn nach einem Entnahmeschritt gerade eine freie Beschickungsstation benötigt wird. Derartige Ausführungen bieten sich insbesondere für kleinere Anlagen zum Herstellen von Rotationsgussprodukten an oder für Anlagen, die öfters verkleinert oder erweitert werden. Aufgrund der Mehrfachfunktionalitäten der einzelnen Bearbeitungsvorrichtungen wird insbesondere eine besondere Flexibilität beim Zusammenstellen der jeweils benötigten Anlage zum Herstellen von Rotationsgussprodukten erreicht.

Insbesondere bei kleineren Anlagen zum Herstellen von Rotationsgussprodukten ist es oftmals ausreichend, wenn eine einzige Bearbeitungsvorrichtung sowohl als Beschickungsstation, als auch als Entnahmestation verwendet wird und außerdem keine weitere Beschickungsstation und keine weitere Entnahmestation vorhanden ist. Die Verwendung einer einzigen Bearbeitungsvorrichtung als Beschickungsstation und als Entnahmestation ist bei kleineren Anlagen, die beispielsweise nur eine einstellige Zahl von Rotationsstationen und Kühlstationen aufweist, deshalb möglich, weil die erforderliche Zeit für das Beschicken und Entnehmen in aller Regel deutlich kürzer ist, als die Zeit, die für das Heizen und Rotieren und für das Abkühlen benötigt wird. Dies insbesondere dann, wenn das Beschicken und das Entnehmen, was weiter unten noch ausführlich erläutert ist, automatisch von einer Maschine, beispielsweise einem Roboter, vollzogen wird.

Zum Beschicken der Gussformen der einzelnen kugelförmigen Aufnahmekörper kann die Beschickungsstation einen Automaten aufweisen, der insbesondere dazu ausgebildet ist, den Aufnahmekörper zunächst zu öffnen.

Beispielsweise kann der Aufnahmekörper zwei voneinander trennbare Kugelhälften aufweisen, so dass die obere Kugelhälfte angehoben werden kann, nachdem die Kontaktebene, in der sich die Kugelhälften berühren, horizontal ausgerichtet wurde. Alternativ kann der kugelförmige Aufnahmekörper beispielsweise zwei Kugelhälften aufweisen, die mit einem Scharnier verbunden sind, so dass der kugelförmige Aufnahmekörper aufgeklappt werden kann, um die Gussform beziehungsweise die Gussformen erreichen zu können. Insoweit kann ganz Allgemein vorteilhaft vorgesehen sein, dass der Automat den jeweiligen kugelförmigen Aufnahmekörper automatisch öffnet und nach einem Beschickungsvorgang wieder automatisch schließt. Wenn die Beschickungsstation gleichzeitig auch als Entnahmestation fungiert, kann vorteilhaft vorgesehen sein, dass der Automat den jeweiligen kugelförmigen Aufnahmekörper für ein Entnehmen des fertigen Rotationsgussproduktes beziehungsweise der fertigen Rotationsgussprodukte öffnet und anschließend neues Rohmaterial in die Gussform beziehungsweise die Gussformen einfüllt und danach den kugelförmigen Aufnahmekörper, insbesondere automatisch, wieder schließt.

Wie bereits erwähnt, hat die Erfindung den ganz besonderen Vorteil, dass jede Gussform oder jeden Gussformtyp jeweils spezifisch eine Rohmaterialart und/oder eine Rohmaterialmenge pro Füllung zugeordnet werden kann, so dass jede Gussform zu Beginn eines jeden Prozessdurchlaufs mit Rohmaterial der spezifisch zugeordneten Rohmaterialart der spezifisch zugeordneten Rohmaterialmenge, insbesondere automatisch, befüllt werden kann. Beispielsweise ist es möglich, dass ein erster Aufnahmekörper eine besonders kleine Gussform aufweist, in die eine geringe Menge von Rohmaterial eingefügt werden muss, während ein anderer Aufnahmekörper eine größere Gussform aufweist, die mit einer größeren Menge an Rohmaterial beschickt werden muss, um zu gewährleisten, dass das herzustellende Rotationsgussprodukt an allen Stellen eine ausreichende Wanddicke aufweist.

Beispielsweise kann jeder Aufnahmekörper und/oder jede Gussform, insbesondere maschinenlesbar, markiert sein, so dass beispielsweise für einen Beschickungsautomaten erkennbar ist, mit welchem Rohmaterial und mit welcher Rohmaterialmenge die Beschickung zu erfolgen hat. Wie weitere unten noch im Detail erläutert wird, kann der Aufnahmekörper und/oder die jeweilige Gussform einen, insbesondere maschinenlesbaren, Code, beispielsweise einen optisch ablesbaren Barcode oder QR-Code oder RFID-Code, aufweisen, der entweder unmittelbar eine Information über die zu verwendende Rohmaterialart und/oder die Rohmaterialmenge beinhaltet oder der es ermöglicht, insbesondere automatisch, in einer Datenbank einer zentralen Steuerung nachzusehen, welche Rohmaterialart und welche Rohmaterialmenge dem Aufnahmekörper und/oder dessen Gussform beziehungsweise Gussformen spezifisch zugeordnet sind.

Wie bereits erwähnt, kann vorteilhaft vorgesehen sein, dass unterschiedliche Aufnahmekörper in den Bearbeitungsvorrichtungen unter Beachtung jeweils spezifischer Bearbeitungsparameter, die sich von Aufnahmeköper zu Aufnahmeköper unterscheiden können, bearbeitet werden. Hierzu ist es, insbesondere bei einer automatischen Anlage, erforderlich, dass die einzelnen Bearbeitungsvorrichtungen und/oder eine zentrale Steuerungsvorrichtung trotz einer möglicherweise äußerlich gleichen Form (beispielsweise Kugelform) der Aufnahmekörper darüber informiert ist, welche Bearbeitungsparameter für den jeweiligen Aufnahmeköper gelten. Insoweit kann vorteilhaft vorgesehen sein, dass jedem Aufnahmeköper individuell ein Satz von Bearbeitungsparametern zugeordnet wird und die Aufnahmekörper in den Bearbeitungsvorrichtungen, denen sie zugeführt werden, unter Einhaltung der jeweils spezifisch zugeordneten Bearbeitungsparameter bearbeitet werden. Hierbei kann beispielsweise vorgesehen sein, dass jedem Aufnahmekörper individuell ein Satz von Bearbeitungsparametern zugeordnet und in einer Datenbank abgelegt wird und/oder dass jedem Aufnahmekörper individuell ein Satz von Bearbeitungsparametern zugeordnet und an oder in dem Aufnahmekörper, insbesondere in maschinenlesbarer Form, hinterlegt wird.

Wenn ein Satz von Bearbeitungsparametern einem Aufnahmekörper zugeordnet und in einer Datenbank abgelegt ist, ist es von Vorteil, wenn der Aufnahmekörper mit einem, insbesondere maschinenlesbaren, Code markiert ist, der es der jeweiligen Bearbeitungsvorrichtung erlaubt, in der Datenbank nachzusehen, welche der spezifischen Bearbeitungsparameter bei der Bearbeitung des jeweiligen Aufnahmekörpers von ihr einzuhalten sind.

Wie bereits erwähnt, kann alternativ zu einer Datenbankzuordnung der Bearbeitungsparameter auch vorgesehen sein, dass die für eine Aufnahmeform spezifischen Bearbeitungsparameter unmittelbar in einem Code an oder in dem Aufnahmekörper abgelegt werden.

Der Code kann, beispielsweise als optisch ablesbarer Barcode oder QR-Code, an dem Aufnahmekörper angebracht sein oder beispielsweise als RFID-Code übertragen werden. Alternativ oder zusätzlich ist es beispielsweise auch möglich, dass der Aufnahmekörper und/oder seine Gussform einen Transponder beinhaltet, der den Code per Funk übermittelt. Letztlich sind hinsichtlich der Informationsübertragung keine Grenzen gesetzt. Insoweit kann eine Informationsübertragung hinsichtlich des Codes oder unmittelbar hinsichtlich der Bearbeitungsparameter in vielfältiger Weise optisch, akustisch, oder per Funk erfolgen.

Ein Satz von Bearbeitungsparametern für einen Aufnahmekörper kann insbesondere eine Information über eine Rotationsdauer und/oder über ein Rotationsbewegungsmuster beinhalten.

Insbesondere kann vorteilhaft vorgesehen sein, dass ein Bearbeitungsparameter eine Ofentemperatur betrifft. Die Ofentemperatur ist die Temperatur innerhalb der Rotationsvorrichtung. Insbesondere kann ein Bearbeitungsparameter beispielsweise eine obere Arbeitstemperatur der Gussform betreffen. Hierbei handelt es sich um die Temperatur, die eine Gussform während des Rotationsvorganges aufweisen muss, damit sich das heißschmelzende Rohmaterial an den Innenwänden der Gussform anlagert. Beispielsweise kann die Temperatur der Gussform mittels eines Pyrometers, insbesondere automatisch, überwacht und/oder gesteuert werden.

Insbesondere kann ein Bearbeitungsparameter beispielsweise eine untere Arbeitstemperatur der Gussform betreffen. Hierbei handelt es sich um die Temperatur, die die Gussform am Ende eines Abkühlvorganges aufweisen muss, insbesondere bevor das Rotationsgussprodukt entnommen werden kann.

Ein Beheizen des jeweiligen Aufnahmekörpers und/oder dessen Gussform(en) kann insbesondere durch Anblasen mit Heißluft erfolgen. Insoweit kann ein Bearbeitungsparameter eine Strömungsgeschwindigkeit eines Heißluftstromes zum Heizen einer Gussform und/oder eine Heißlufttemperatur betreffen.

Das Kühlen, insbesondere in einer Kühlstation, kann insbesondere durch Anblasen mit Kaltluft erfolgen. Insoweit kann ein Bearbeitungsparameter eine Strömungsgeschwindigkeit eines Kaltluftstromes zum Kühlen einer Gussform und/oder eine eine Kaltlufttemperatur betreffen.

Alternativ oder zusätzlich kann ein Satz von Bearbeitungsparametern für einen Aufnahmekörper kann insbesondere eine Information über eine Heiztemperatur und/oder über eine Heizzeit und/oder über eine Abkühlzeit und/oder über eine Sollausrichtung für eine Entnahme des Rotationgussprodukts und/oder über eine Sollausrichtung für ein Beschicken der Gussform und/oder über eine Rohmaterialeigenschaft, insbesondere eine Rohmaterialmenge oder eine Rohmaterialfarbe oder eine Rohmaterialart, betreffen. Jede Bearbeitungsvorrichtung kann vorteilhaft unter Verwendung der für den jeweiligen zu bearbeitenden Aufnahmekörper spezifischen Bearbeitungsparameter - eigenständig oder durch eine zentrale Steuerungseinheit gesteuert - arbeiten.

Wie bereits erwähnt kann vorteilhaft vorgesehen sein, dass die Aufnahmekörper unstetig und/oder asynchron zwischen den Bearbeitungsvorrichtungen transportiert werden. Dies ermöglicht es vorteilhaft - anders als bei einem kontinuierlichem Förderstrom - die einzelnen Aufnahmekörper individuell und spezifisch nach eigenen Bearbeitungsparametern zu bearbeiten. Dies schließt jedoch nicht aus, dass Förderer, insbesondere abschnittweise, ein Fließband oder eine eindimensionale Kugelrollbahn aufweist.

Bei einer besonders vorteilhaften Ausführung werden die Aufnahmekörper vor dem Entnehmen des Rotationsgussproduktes, insbesondere automatisch, in einer bestimmten Ausrichtung orientiert. Diese Ausrichtung ist vorzugsweise so gewählt, dass ein besonders einfaches Öffnen des Aufnahmekörpers ermöglicht ist. Insbesondere bei einer Ausführung, die kugelförmige Aufnahmekörper mit jeweils zwei Kugelhälften aufweist, ist es von besonderem Vorteil, dass die kugelförmigen Aufnahmekörper vor dem Entnehmen des Rotationsgussproduktes beziehungsweise der Rotationsgussprodukte, insbesondere automatisch, jeweils so ausgerichtet werden, dass die Trennlinie zwischen den zwei Kugelhälften horizontal ausgerichtet ist. Hierbei kann vorteilhaft auch voreingestellt sein, welche der beiden Kugelhälften nach oben und welche nach unten zu orientieren ist. Eine Ausrichtvorrichtung kann beispielsweise Teil des Förderers sein oder unmittelbar an den Förderer angeordnet sei. Alternativ ist es auch möglich, dass die Ausrichtstation Teil einer Entnahmestation ist oder unmittelbar an einer Entnahmestation angeordnet ist.

Bei einer besonderen Ausführung weist die Anlage zum Herstellen von Rotationsgussprodukten zusätzlich eine Schleuse auf, die dazu ausgebildet und angeordnet ist, einen der kugelförmigen Aufnahmekörper von dem Förderer zu empfangen und/oder einen anderen der kugelförmigen Aufnahmekörper an den Förderer zu übergeben und die es ermöglicht, kugelförmige Aufnahmekörper aus dem Bearbeitungsprozess auszuschleusen und/oder kugelförmige Aufnahmekörper in den Bearbeitungsprozess einzuschleusen. Eine solche Schleuse kann als Einschleusestation oder als Ausschleusestation ausgebildet sein. Es ist, insbesondere für kleinere Anlagen, auch möglich, dass ein und dieselbe Station sowohl als Einschleusestation und auch als Ausschleusestation fungiert.

Eine solche Schleuse hat den besonderen Vorteil, dass einzelne kugelförmige Aufnahmekörper, beispielsweise wenn sie defekt sind oder mit anderen Gussformen bestückt werden sollen, dem Produktionsprozess entnommen und wieder hinzugefügt werden können, ohne die gesamte Anlage vorübergehend vollständig zu stoppen. Im Gegenteil kann mittels wenigstens einer Schleuse vorteilhaft ein Entnehmen und Hinzufügen von kugelförmigen Aufnahmekörpern im laufenden Produktionsprozess erfolgen.

Hinsichtlich der Ausbildung des Förderers bestehen im Wesentlichen keine Beschränkungen. So kann der Förderer beispielsweise einen Linearförderer und/oder eine Förderbahn und/oder eine Kugelrollbahn und/oder wenigstens einen, insbesondere drehbar gelagerten, Transportarm aufweisen. Alternativ oder zusätzlich kann auch vorgesehen sein, dass der Förderer wenigstens einen Greifer zum Greifen einer der Aufnahmekörper aufweist und/oder dass der Förderer als Unstetigförderer ausgebildet ist. Insbesondere kann, wie bereits erwähnt, vorteilhaft vorgesehen sein, dass der Förderer die Aufnahmekörper asynchron zwischen den Bearbeitungsvorrichtungen transportiert. Insbesondere kann der Förderer auch als Roboter, insbesondere als Industrieroboter, ausgebildet sein.

Insbesondere kann vorteilhaft vorgesehen sein, dass der Förderer einen der Aufnahmekörper nach einem Beschickungsvorgang einer Beschickungsstation entnimmt und an die Rotationsstation, insbesondere an eine gerade freie von mehreren Rotationsstationen, übergibt, die den Aufnahmekörper rotiert, und den Aufnahmekörper nach dem Rotationsvorgang der Rotationsstation entnimmt und an eine Entnahmestation übergibt.

Hierbei kann vorteilhaft insbesondere außerdem vorgesehen sein, dass die Rotationsstation die Gussform für einen Heizvorgang mit Energie beaufschlagt während sie den Aufnahmekörper rotiert und dass der Förderer den Aufnahmekörper nach dem Herstellungsschritt des Rotierens an eine Kühlstation, insbesondere eine gerade freie von mehreren Kühlstationen, übergibt, die den Aufnahmekörper für einen Kühlvorgang empfängt und diesen oder wenigstens dessen Gussform kühlt, und dass der Förderer den Aufnahmekörper nach dem Kühlvorgang der Kühlstation entnimmt und an die Entnahmestation übergibt. Alternativ oder zusätzlich ist es auch möglich, dass der Förderer während der Aufnahmekörper gerade in einer Bearbeitungsvorrichtung bearbeitet wird, andere Aufnahmekörper anderen Bearbeitungsvorrichtungen zuführt und/oder entnimmt, und/oder andere Aufnahmekörper in anderen Bearbeitungsvorrichtungen bearbeitet werden und/oder dass während ein Aufnahmekörper gerade in einer Bearbeitungsvorrichtung (2) gemäß seinen spezifischen Bearbeitungsparametern bearbeitet wird, der Förderer (8) andere Aufnahmekörper gemäß deren spezifischen Bearbeitungsparametern anderen Bearbeitungsvorrichtungen zuführt und/oder entnimmt, und/oder andere Aufnahmekörper gemäß deren spezifischen Bearbeitungsparametern in anderen Bearbeitungsvorrichtungen zeitgleich oder zeitlich überlappend bearbeitet werden.

Hierbei kann vorteilhaft insbesondere außerdem vorgesehen sein, dass der Förderer jeweils den Aufnahmekörper, dessen Gussform gerade neu beschickt wurde, automatisch an eine der Rotationsstationen übergibt, die gerade nicht von einem anderen Aufnahmekörper besetzt ist, und/oder dass mehrere Kühlstationen vorhanden sind, von denen jede dazu ausgebildet ist, jeweils einen der Aufnahmekörper zu empfangen und diesen oder wenigstens dessen Gussform zu kühlen, und dass der Förderer jeweils den Aufnahmekörper(1), dessen Rotationsvorgang gerade beendet wurde, automatisch an eine der Kühlstationen (4) übergibt, die gerade nicht von einem anderen Aufnahmekörper besetzt ist.

Bei einer besonders platzsparenden Ausführung sind die Bearbeitungsstationen auf mindestens zwei unterschiedliche horizontale Ebenen verteilt.

In der Zeichnung ist der Erfindungsgegenstand beispielhaft und schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: ein erstes Ausführungsbeispiel einer erfindungsgemäßen Anlage zum Herstellen von Rotationsgussprodukten,
- Fig. 2: ein zweites Ausführungsbeispiel einer erfindungsgemäßen Anlage zum Herstellen von Rotationsgussprodukten,
- Fig. 3: ein drittes Ausführungsbeispiel einer erfindungsgemäßen Anlage zum Herstellen von Rotationsgussprodukten,
- Fig. 4: ein viertes Ausführungsbeispiel einer erfindungsgemäßen Anlage zum Herstellen von Rotationsgussprodukten,
- Fig. 5: ein fünftes Ausführungsbeispiel einer erfindungsgemäßen Anlage zum Herstellen von Rotationsgussprodukten,
- Fig. 6: ein sechstes Ausführungsbeispiel einer erfindungsgemäßen Anlage zum Herstellen von Rotationsgussprodukten, und
- Fig. 7: ein siebentes Ausführungsbeispiel einer erfindungsgemäßen Anlage zum Herstellen von Rotationsgussprodukten.

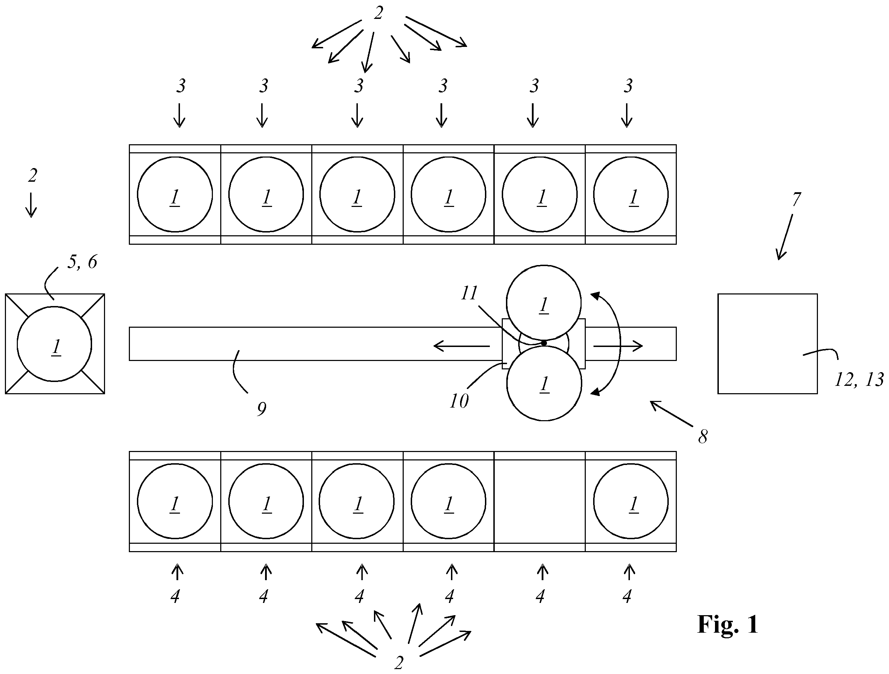

Figur 1 zeigt ein erstes Ausführungsbeispiel einer Anlage zum Herstellen von Rotationsgussprodukten, die mehrere gleichartige kugelförmige Aufnahmekörper 1 beinhaltet, von denen jeder zumindest eine (nicht dargestellte) Aufnahme mit einer (nicht dargestellten) Gussform aufweist. Die Anlage weist darüber hinaus mehrere unabhängig voneinander betreibbare und unabhängig voneinander arbeitende Bearbeitungsvorrichtungen 2 auf.

Die Bearbeitungsvorrichtungen einer ersten Gruppe sind als Rotationsstationen 3 ausgebildet. Jede der Rotationsstationen 3 kann einen kugelförmigen Aufnahmekörper 1 empfangen und diesen oder wenigstens dessen Gussform für einen Heizvorgang mit Energie beaufschlagen, sowie den kugelförmigen Aufnahmekörper 1, insbesondere nach einem individuell und spezifisch für den gerade zu rotierenden kugelförmigen Aufnahmekörper 1 vorgegebenen Rotationsbewegungsmuster, rotieren.

Die Anlage weist darüber hinaus eine zweite Gruppe von Bearbeitungsvorrichtungen 2 auf, die als Kühlstationen 4 ausgebildet sind. Jede der Kühlstationen 4 kann einen der kugelförmigen Aufnahmekörper 1 empfangen und diesen oder wenigstens dessen Gussform, beispielsweise durch Anblasen mit gekühlter Luft, kühlen.

Die Anlage zum Herstellen von Rotationsgussprodukten weist außerdem eine Bearbeitungsvorrichtung 2 auf, die sowohl als Beschickungsstation 5, als auch als Entnahmestation 6 fungiert. Darüber hinaus weist die Anlage eine Schleuse 7 auf, die es ermöglicht, jeweils einen der kugelförmigen Aufnahmekörper 1 aus dem laufenden Produktionsprozess auszuschleusen oder einen kugelförmigen Aufnahmekörper 1 in den laufenden Produktionsprozess einzuschleusen. Die Schleuse 7 fungiert sowohl als Einschleusestation 12, als auch als Ausschleusestation 13.

Darüber hinaus weist die Anlage einen Förderer 8 auf, der befähigt ist, die kugelförmigen Aufnahmekörper 1 voneinander unabhängig den Bearbeitungsvorrichtungen 2 zuzuführen und jeweils nach einem Bearbeitungsvorgang von den Bearbeitungsvorrichtungen 2 zu empfangen. Der Förderer 8 beinhaltet einen Linearförderer mit einer Führungsbahn 9, auf der ein Schlitten 10 linear beweglich angeordnet ist. Der Schlitten 10 trägt zwei (nicht dargestellte) Transportarme, die gemeinsam um eine Rotationsachse 11 gedreht werden können. Am Ende jedes der Transportarme ist ein (nicht dargestellter) Greifer zum Greifen eines kugelförmigen Aufnahmekörper 1 angeordnet.

Der Förderer 8 kann einen kugelförmigen Aufnahmekörper 1 deren Gussform gerade in der kombinierten Beschickungsstation und Entnahmestation 5, 6, insbesondere automatisch, mit Rohmaterial beschickt wurde der kombinierten Beschickungsstation- und Entnahmestation 5, 6, entnehmen. Hierzu werden die Transportarme von der in Figur 1 dargestellten Stellung um 90 Grad gedreht und der Schlitten 10 ganz nach links verfahren. Nach dem Entnehmen kann der Förderer 8 den entnommenen kugelförmigen Aufnahmekörper 1 einer gerade freien Rotationsstation 3 zuführen. Hierzu werden die Rotationsarme erneut um 90 Grad derart gedreht, dass der entnommene kugelförmige Aufnahmekörper nun den Rotationsvorrichtungen 3 zugewandt ist. Der Schlitten 10 wird zum Übergeben des kugelförmigen Aufnahmekörpers linear verfahren, bis er der freien Rotationsstation 3 gegenüberliegend angeordnet ist.

Wenn der Rotations- und Heizprozess in Bezug auf einen der kugelförmigen Aufnahmekörper in einer der Rotationsstationen 3 abgeschlossen ist, wird der betreffende kugelförmige Aufnahmekörper 1 der betreffenden Rotationsstation 3 entnommen. Anschließend werden die Transportarme des Förderers 8 um 180 Grad gedreht, so dass der der Rotationsstation 3 gerade entnommene kugelförmige Aufnahmekörper 1 nun den Kühlstationen 4 zugewandt ist. Der Schlitten 10 des Förderers 8 wird nun linear verschoben, bis der der Rotationsstation 3 entnommene und nun zu kühlende kugelförmige Aufnahmekörper 1 einer freien Kühlstation 4 gegenüberliegt. Anschließend wird der zu kühlende kugelförmige Aufnahmekörper 1 der freien Kühlstation 4 übergeben.

Wenn die Gussform eines kugelförmigen Aufnahmekörpers 1 ausreichend abgekühlt ist, kann der Förderer den betreffende kugelförmigen Aufnahmekörper 1 der jeweiligen Kühlstation 4 entnehmen und an die kombinierte Beschickungs- und Entnahmestation 5, 6 übergeben, wobei die Transportarme nach dem Entnehmen um 90 Grad verschwenkt werden.

In der kombinierten Beschickungs- und Entnahmestation 5, 6 wird der übergebene kugelförmige Aufnahmekörper 1 zunächst in einer vorbestimmten Orientierung ausgerichtet. Dies ermöglicht es, den kugelförmigen Aufnahmekörper 1 einfach und unkompliziert, insbesondere automatisch, öffnen zu können. Beispielsweise kann nach dem Ausrichten eine obere Kugelhälfte des kugelförmigen Aufnahmekörpers 1 abgehoben oder weggeklappt werden, damit die Gussform beziehungsweise die Gussformen zugänglich werden. Nach dem Öffnen des kugelförmigen Aufnahmekörpers 1 können die fertigen Rotationsgussprodukte, insbesondere automatisch, entnommen und beispielsweise auf einem (nicht dargestellten) Förderband abgelegt oder in eine Transportkiste sortiert werden.

Nach dem Entnehmen kann die Gussform des kugelförmigen Aufnahmekörpers 1, der sich in der kombinierten Beschickungs- und Entnahmestation 5, 6 befindet, neu mit Rohmaterial, insbesondere automatisch, beschickt werden. Hierbei kann insbesondere vorteilhaft vorgesehen sein, dass die kombinierte Beschickungs- und Entnahmestation 5, 6 eine für genau diese Gussform spezifische Menge an Rohmaterial einer genau diese Gussform spezifischen Rohmaterialart in die Gussform einfüllt. Gleiches gilt natürlich analog für jede Gussform, wenn der kugelförmige Aufnahmekörper 1 mehrere Gussformen beinhaltet.

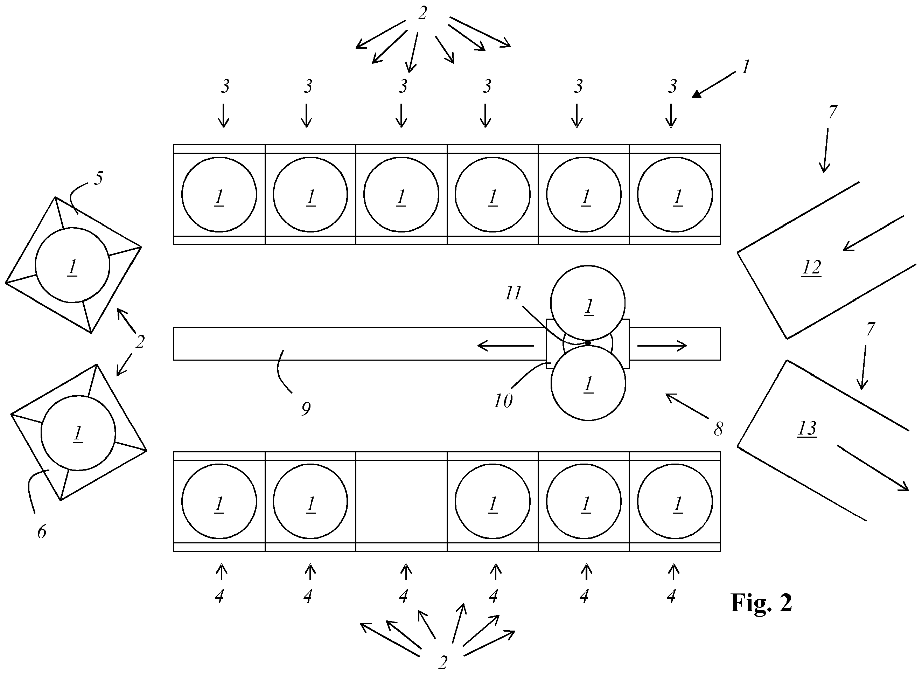

Figur 2 zeigt ein zweites Ausführungsbeispiel einer erfindungsgemäßen Anlage zum Herstellen von Rotationsgussprodukten. Diese unterscheidet sich von der in Figur 1 dargestellten Anlage dadurch, dass statt einer kombinierten Beschickungs- und Entnahmestation 5, 6 separate Bearbeitungsvorrichtungen 2, nämlich eine Beschickungsstation 5, die ausschließlich als Beschickungsstation fungiert, und eine Entnahmestation 6, die ausschließlich als Entnahmestation 6 fungiert, vorhanden sind.

Bei dieser Ausführung wird jeweils ein kugelförmiger Aufnahmekörper 1 nach dem Abkühlen zunächst der Entnahmestation 6 übergeben und dort ausgerichtet, so dass die Rotationsgussprodukte entnommen werden können. Nach dem Entnehmen transportiert der Förderer 8 den jeweiligen kugelförmigen Aufnahmekörper 1 zu der Beschickungsstation 5, wo die Gussform beziehungsweise die Gussformen des kugelförmigen Aufnahmekörpers 1 neu mit Rohmaterial, insbesondere nach spezifischen Vorgaben speziell für diese Gussform beziehungsweise Gussformen, beschickt werden. Anschließend kann der kugelförmige Aufnahmekörper 1 mit der neu beschickten Gussform wieder einer Rotationsstation 3 übergeben werden. Zwischen den geschilderten Schritten drehen sich die Transportarme des Förderers 8 zum Übergeben beziehungsweise zum Entnehmen des kugelförmigen Aufnahmekörpers 1 jeweils um 60 Grad.

Die in Figur 2 gezeigte Anlage unterscheidet sich von der in Figur 1 dargestellten Anlage außerdem dadurch, dass eine Schleuse 7 vorhanden ist, die eine Einschleusestation 12 und eine Ausschleusestation 13 aufweist. Die Einschleusestation 12 ist ganz spezifisch zum Einschleusen eines kugelförmigen Aufnahmekörpers 1 ausgebildet, während die Ausschleusestation 13 ganz spezifisch zum Ausschleusen eines kugelförmigen Aufnahmekörpers 1 ausgebildet ist.

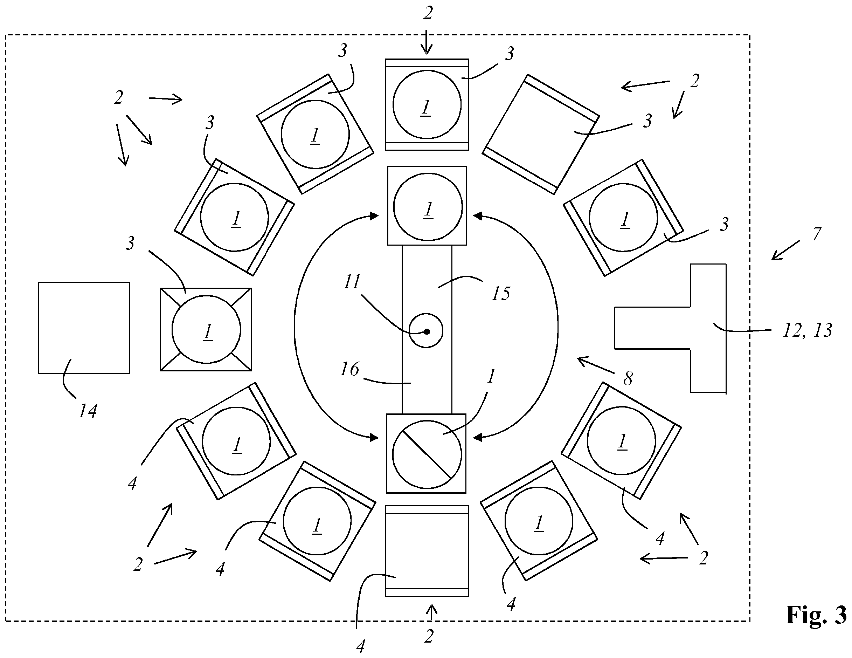

Figur 3 zeigt ein drittes Ausführungsbeispiel einer erfindungsgemäßen Anlage zum Herstellen von Rotationsgussprodukten. Die Anlage weist mehrere Bearbeitungsvorrichtungen 2 auf, die im Kreis aufgestellt sind. Auch bei dieser Anlage gibt es Bearbeitungsvorrichtungen 2, die spezifisch als Rotationsstationen 3 ausgebildet sind und Bearbeitungsvorrichtungen 2, die spezifisch als Kühlstationen 4 ausgebildet sind. Darüber hinaus gibt es eine kombinierte Beschickungs- und Entnahmestation 5, 6, die einen Entnahmeroboter 14 aufweist. Desweiteren gibt es eine Schleuse 7, die sowohl als Einschleusestation 12, als auch als Ausschleusestation 13 fungiert.

Der Förderer 8 weist zwei fest miteinander verbundene Transportarme 15, 16 auf, die um eine Rotationsachse 11 rotierbar gelagert sind. An den Enden jedes Transportarms 15, 16 ist ein (nicht dargestellter) Greifer zum Greifen jeweils eines kugelförmigen Aufnahmekörpers 1 angeordnet. An dem Transportarm 16 ist zusätzlich eine Ausrichtvorrichtung (nicht dargestellt) vorhanden, um einen gegriffenen kugelförmigen Aufnahmekörper 1 in eine vorgegebene Orientierung, insbesondere für ein Entnehmen oder Beschicken, ausrichten zu können. Hierbei ist vorgesehen, dass der Förderer 8 jeweils den an die kombinierte Beschickungs- und Entnahmestation 5, 6 zu übergebende kugelförmige Aufnahmekörper 1 ausrichtet, bevor er übergeben wird.

Zum Entnehmen oder Übergeben eines kugelförmigen Aufnahmekörpers 1 an eine der Bearbeitungsvorrichtungen 2 werden die Transportarme 15, 16 jeweils derart gedreht, bis das jeweilige freie Ende, dessen Greifer nun einen kugelförmigen Aufnahmekörper 1 entnehmen oder übergeben soll, der jeweiligen Bearbeitungsvorrichtung 2 gegenüberliegend angeordnet ist.

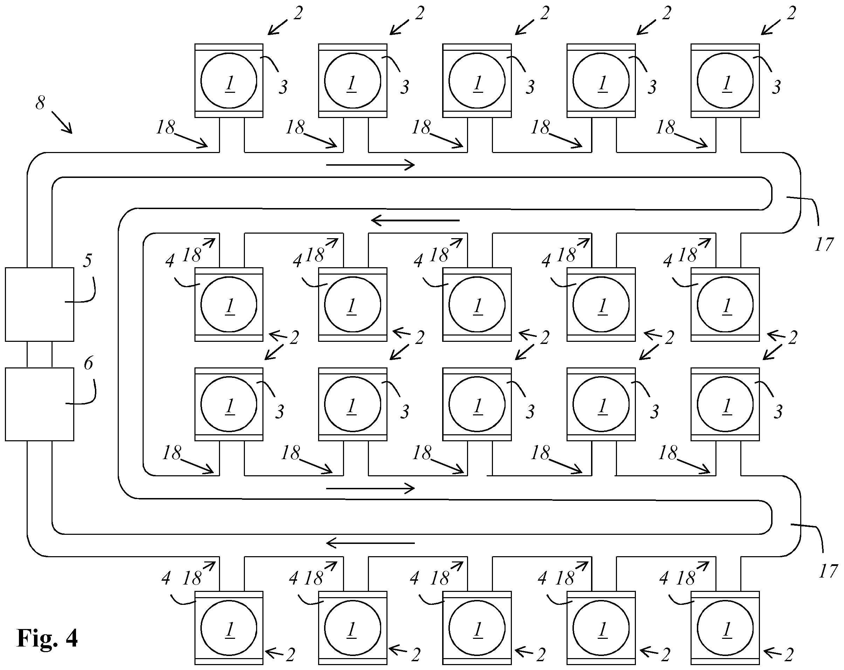

Figur 4 zeigt ein viertes Ausführungsbeispiel einer erfindungsgemäßen Anlage zum Herstellen von Rotationsgussprodukten. Die Anlage weist mehrere Bearbeitungsvorrichtungen 2 auf, von denen einige als Rotationsstation 3 und andere als Kühlstation 4 ausgebildet sind. Darüber hinaus ist eine der Bearbeitungsvorrichtungen als Beschickungsstation 5 und eine andere der Bearbeitungsvorrichtungen 2 als Entnahmestation 6 ausgebildet. Der Förderer 8 weist eine unendliche Kugelrollbahn 17 auf, entlang der die kugelförmigen Aufnahmekörper 1, beispielsweise von einem Transportband angetrieben, entlang rollen können. Von der Kugelrollbahn 17 geht jeweils eine schaltbare Weiche 18 zu jeder der Bearbeitungsvorrichtungen 2 ab. Auf diese Weise kann, individuell gesteuert, jeder der kugelförmigen Aufnahmekörper 1 gezielt jeder der Bearbeitungsvorrichtungen 2, abhängig vom gerade erforderlichen Bearbeitungsschritt, zugeführt werden.

Nach einem Beschicken in der Beschickungsstation 5 mit Rohmaterial wird der frisch beschickte kugelförmige Aufnahmekörper 1 solange auf der Kugelrollbahn 17 transportiert, bis er zu einer freien Rotationsstation 3 gelangt. Die der freien Rotationstation 3 vorgeschaltete Weiche 18 wird dann so umgeschaltet, dass der frisch beschickte kugelförmige Aufnahmekörper 1 zu der freien Rotationsstation 3 geführt wird. Nach Abschluss des Rotations- und Heizvorganges gelangt der kugelförmige Aufnahmekörper 1 wieder zurück auf die Kugelrollbahn 17 und wird dort solange weiterbefördert, bis er zu einer freien Kühlstation 4 gelangt. Die der freien Kühlstation 4 zugeordnete Weiche 18 wird dann so geschaltet, dass der kugelförmige Aufnahmekörper 1 der freien Kühlstation 4 zugeführt wird. Nach dem Kühlvorgang gelangt der kugelförmige Aufnahmekörper zurück auf die Kugelrollbahn 17 und gelangt schließlich zur Entnahmestation 6, wo das fertige Rotationsgussprodukt entnommen wird. Anschließend wird der kugelförmige Aufnahmekörper 1 wieder der Beschickungsstation 5 übergeben, so dass sich der gesamte Vorgang nun wiederholen kann.

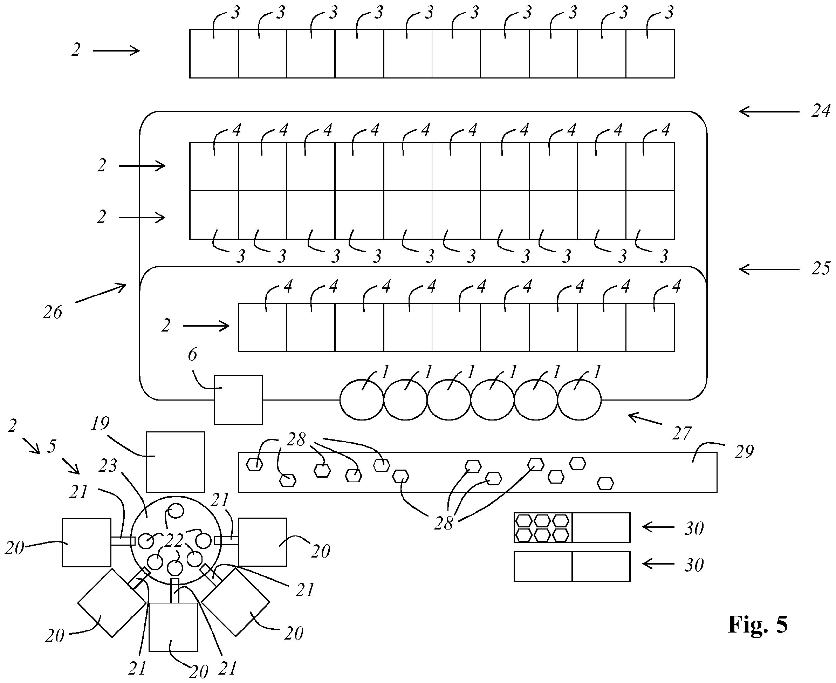

Figur 5 zeigt ein fünftes Ausführungsbeispiel einer erfindungsgemäßen Anlage zum Herstellen von Rotationsgussprodukten 28. Die Anlage weist mehrere Bearbeitungsvorrichtungen 2 auf, von denen eine als Beschickungsstation 5 ausgebildet ist.

Die Beschickungsstation 5 beinhaltet einen Roboter 19, der die Gussformen der einzelnen kugelförmigen Aufnahmekörper 1 mit jeweils einer spezifischen Menge einer jeweils spezifischen Art von Rohmaterial befüllt. Dies geschieht im Einzelnen wie folgt: Die Beschickungsstation 5 weist mehrere Vorratsbehälter 20 auf, die mit unterschiedlichen Rohmaterialien gefüllt sind. An jedem Vorratsbehälter 20 ist jeweils ein Dosierspender 21 angeordnet, der so gesteuert ist, dass die jeweils für eine bestimmte Gussform erforderliche Menge an Rohmaterial in einen Topf 22, der sich auf einem rotierenden Teller 23 befindet gefüllt wird. Sobald der Topf nach dem Befüllen den Roboter 19 erreicht, ergreift dieser den Topf und schüttet den Inhalt in die zugeordnete Gussform des zu beschickenden kugelförmigen Aufnahmekörpers 1. Der kugelförmige Aufnahmekörper 1 wird dann automatisch geschlossen und gelangt entlang einer Kugelrollbahn 17 zu den weiteren Bearbeitungsvorrichtungen 2.

Die Anlage weist eine erste Reihe 24 und eine zweite Reihe 25 von Bearbeitungsvorrichtungen 2 auf, die jeweils mit Rotationsstationen 3 und Kühlstationen 4 bestückt sind. Je nachdem in welcher Reihe 25, 26 gerade genügend freie Kapazität ist, kann mittels einer Steuerungsweiche 26 eingestellt werden, in welche Reihe der jeweils einem Rotations- und Heizvorgang zuzuführende kugelförmige Aufnahmekörper 1 gelangen soll. Nach dem Kühlvorgang in einer der Kühlstationen 4 gelangt der jeweilige kugelförmige Aufnahmekörper 1 in eine Pufferzone 27 und dann zu einer Entnahmestation 6, wo das Entnehmen der fertigen Rotationsgussprodukte 28 erfolgt. Diese werden von dem Roboter 19 auf einem Transportband 29 abgelegt und anschließend, insbesondere automatisch in bereitgestellte Transportkisten 30 sortiert.

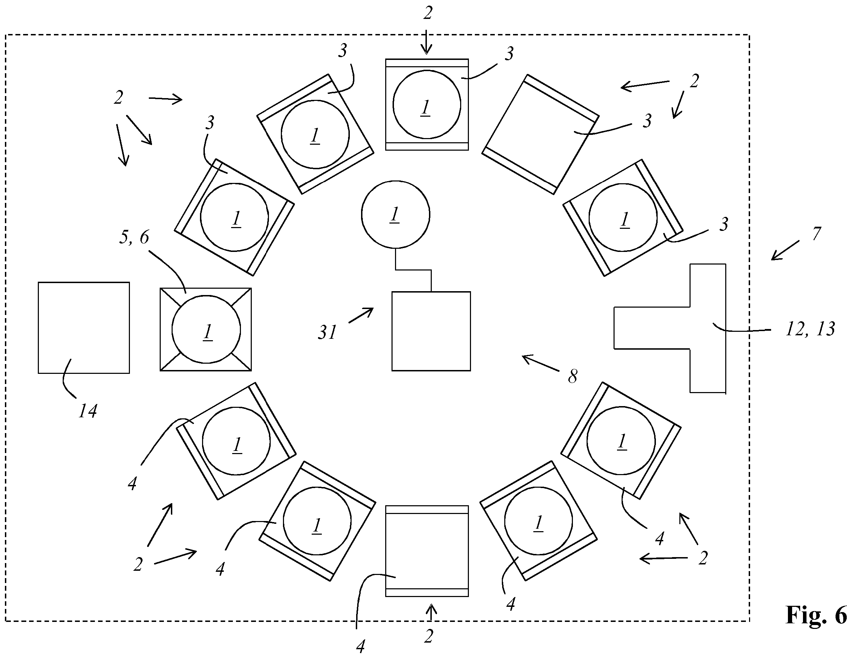

Figur 6 zeigt ein sechstes Ausführungsbeispiel einer erfindungsgemäßen Anlage zum Herstellen von Rotationsgussprodukten. Die Anlage weist mehrere Bearbeitungsvorrichtungen 2 auf, die im Kreis aufgestellt sind. Auch bei dieser Anlage gibt es Bearbeitungsvorrichtungen 2, die spezifisch als Rotationsstationen 3 ausgebildet sind und Bearbeitungsvorrichtungen 2, die spezifisch als Kühlstationen 4 ausgebildet sind. Darüber hinaus gibt es eine kombinierte Beschickungs- und Entnahmestation 5, 6, die einen Entnahmeroboter 14 aufweist. Desweiteren gibt es eine Schleuse 7, die sowohl als Einschleusestation 12, als auch als Ausschleusestation 13 fungiert.

Der Förderer 8 ist bei dieser Ausführung als Industrieroboter ausgebildet. Eine solche Ausführung hat den ganz besonderen Vorteil, dass der Förderer einfach, insbesondere durch einfaches Umprogrammieren, angepasst werden kann, wenn die Anlage durch Hinzufügen weiterer Bearbeitungsvorrichtungen erweitert oder durch Entfernen einzelner Bearbeitungsvorrichtungen verkleinert werden soll.

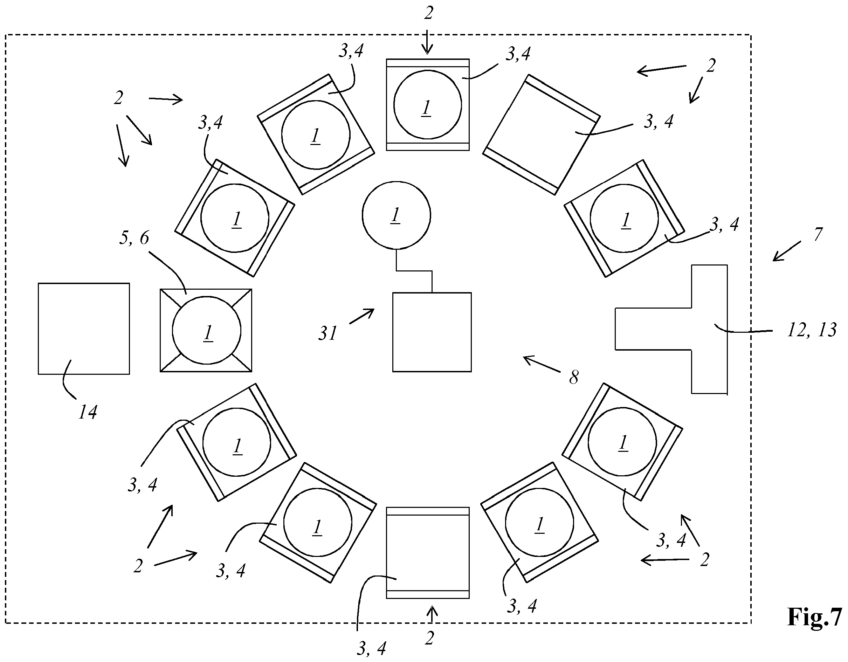

Figur 7 zeigt ein siebentes Ausführungsbeispiel einer erfindungsgemäßen Anlage zum Herstellen von Rotationsgussprodukten. Die Anlage weist mehrere Bearbeitungsvorrichtungen 2 auf, die im Kreis aufgestellt sind.

Jeder der Bearbeitungsvorrichtungen 2 ist dazu ausgebildet, sowohl als Rotationsstation 3 zum Heizen und Rotieren jeweils einer kugelförmigen Aufnahmevorrichtung 1, als auch als Kühlstation 4, zum Abkühlen jeweils einer der kugelförmigen Aufnahmekörper 1 zu fungieren. Vorzugsweise erfolgt das Abkühlen jeweils unter gleichzeitiger Rotation des kugelförmigen Aufnahmekörpers. Eine Rotation während des Abkühlens gewährleistet, dass das Rohmaterial bis zum Erreichen einer ausreichenden Festigkeit in der gewünschten Form an der Innenwandung der Gussform gehalten wird.

Darüber hinaus gibt es eine kombinierte Beschickungs- und Entnahmestation 5, 6, die einen Entnahmeroboter 14 aufweist. Desweiteren gibt es eine Schleuse 7, die sowohl als Einschleusestation 12, als auch als Ausschleusestation 13 fungiert. Der Förderer 8 ist bei dieser Ausführung als Industrieroboter ausgebildet.

Dadurch, dass jede der Bearbeitungsvorrichtungen 2 sowohl zum Heizen, als auch zum Abkühlen verwendet werden kann, sind weniger Transportvorgänge erforderlich, weil beide Prozessschritte jeweils in derselben Bearbeitungsvorrichtung 2 vollzogen werden können.

### Bezugszeichenliste:

- 1: Kugelförmiger Aufnahmekörper
- 2: Bearbeitungsvorrichtung
- 3: Rotationsstation
- 4: Kühlstation
- 5: Beschickungsstation
- 6: Entnahmestation
- 7: Schleuse
- 8: Förderer
- 9: Führungsbahn
- 10: Schlitten
- 11: Drehachse
- 12: Einschleusestation
- 13: Ausschleusestation
- 14: Entnahmeroboter
- 15: Transportarm
- 16: Transportarm
- 17: Kugelrollbahn
- 18: Weiche
- 19: Roboter
- 20: Vorratsbehälter
- 21: Dosiervorrichtung
- 22: Topf
- 23: Drehteller
- 24: Erste Reihe
- 25: Zweite Reihe
- 26: Steuerweiche
- 27: Pufferzone
- 28: Rotationsgussprodukte
- 29: Förderband
- 30: Transportkisten
- 31: Industrieroboter

## Patentansprüche

1. Verfahren zum Herstellen von Rotationsgussprodukten (28), **gekennzeichnet durch** das gleichzeitige Verwenden mehrerer, kugelförmiger Aufnahmekörper (1) jeweils ohne eigenen Rotationsantrieb, von denen jeder zumindest eine mit Rohmaterial beschickbare Gussform beinhaltet, und **durch** das gleichzeitige Verwenden mehrerer Bearbeitungsvorrichtungen (2), die unabhängig voneinander betrieben werden, jeweils zum Ausführen wenigstens eines von mehreren Herstellungsschritten mit jeweils einem der kugelförmigen Aufnahmekörper (1), wobei die mit jedem der kugelförmigen Aufnahmekörper (1) auszuführenden Herstellungsschritte beinhalten:
i. Beschicken wenigstens der Gussform mit einem Rohmaterial, in einer Bearbeitungsvorrichtung (2), die als Beschickungsstation (5) ausgebildet ist,
ii. Heizen des Aufnahmekörpers (1) oder wenigstens der Gussform des Aufnahmekörpers (1), während der Aufnahmekörper rotiert wird, in einer Bearbeitungsvorrichtung (2), die als Rotationsstation (3) ausgebildet ist,
iii. Kühlen des Aufnahmekörpers (1) oder wenigstens der Gussform in einer Bearbeitungsvorrichtung (2), die als Kühlstation (4) ausgebildet ist,
iv. Entnehmen des Rotationsgussproduktes aus der Gussform, in einer Bearbeitungsvorrichtung (2), die als Entnahmestation (6) ausgebildet ist und wobei
mehrere Bearbeitungsvorrichtungen (2) zeitlich parallel oder zeitlich überlappend verwendet werden, die als Rotationsstationen (3) ausgebildet sind,
und wobei jeweils der Bearbeitungsvorrichtung (2), die gerade einen Herstellungsschritt abgeschlossen hat, der kugelförmige Aufnahmekörper (1) samt seinem Inhalt und ohne Rotationsantrieb entnommen wird und danach einer beliebigen für den jeweils nächsten der Herstellungsschritte i bis iv geeigneten und gerade freien Bearbeitungsvorrichtung (2) zugeführt wird.

2. Verfahren nach Anspruch 1, **dadurch gekennzeichnet, dass** das Verfahren wenigstens eines der Merkmale beinhaltet:
a. Verwenden von mehreren Bearbeitungsvorrichtungen (2) zeitlich parallel oder zeitlich überlappend, die als Kühlstationen (4) ausgebildet sind,
b. Verwenden von mehreren Bearbeitungsvorrichtungen (2) zeitlich parallel oder zeitlich überlappend verwendet werden, die als Beschickungsstationen (5) ausgebildet sind,
c. Verwenden von mehreren Bearbeitungsvorrichtungen (2) zeitlich parallel oder zeitlich überlappend verwendet werden, die als Entnahmestationen (6) ausgebildet sind.

3. Verfahren nach Anspruch 1 oder 2, **dadurch gekennzeichnet, dass**
a. die Schritte i bis iv zeitlich überlappend und/oder sich zyklisch wiederholend mit einer Vielzahl von Aufnahmekörpern (1) durchführt werden, und/oder dass
b. während ein Aufnahmekörper (1) gerade in einer Bearbeitungsvorrichtung (2) bearbeitet wird, andere Aufnahmekörper (1) anderen Bearbeitungsvorrichtungen (2) zuführt und/oder entnommen werden, und/oder andere Aufnahmekörper (1) in anderen Bearbeitungsvorrichtungen (2) bearbeitet werden.

4. Verfahren nach einem der Ansprüche 1 bis 3, **dadurch gekennzeichnet, dass**
a. die Rotationsstationen (3) ausschließlich als Rotationsstationen (3) verwendet werden oder dass eine der Rotationsstationen (3) zusätzlich auch dazu ausgebildet ist, als Kühlstation (4) zu fungieren und als Kühlstation (4) genutzt wird, wenn gerade eine freie Kühlstation (4) benötigt wird, und/oder dass
b. die Kühlstation (4) ausschließlich als Kühlstation (4) verwendet wird oder dass die Kühlstation (4) zusätzlich auch dazu ausgebildet ist, als Rotationsstation (3) zu fungieren und als Rotationsstation (3) genutzt wird, wenn gerade eine freie Rotationsstation (3) benötigt wird, und/oder dass
c. die Beschickungsstation (5) zusätzlich auch dazu ausgebildet ist, als Entnahmestation (6) zu fungieren und als Entnahmestation (6) genutzt wird, wenn nach einem Abkühlschritt eine frei Entnahmestation (6) benötigt wird, und/oder dass
d. die Entnahmestation (6) zusätzlich auch dazu ausgebildet ist, als Beschickungsstation (5) zu fungieren und als Beschickungsstation (5) genutzt wird, und/oder dass
e. eine einzige Bearbeitungsvorrichtung (2) sowohl als Beschickungsstation (5), als auch als Entnahmestation (6) verwendet wird und außerdem keine weitere Beschickungsstation (5) und keine weitere Entnahmestation (6) verwendet wird.

5. Verfahren nach einem der Ansprüche 1 bis 4, **dadurch gekennzeichnet, dass**
a. jeder Gussform oder jedem Typ von Gussformen jeweils spezifisch eine Rohmaterialart und/oder eine Rohmaterialmenge pro Füllung zugeordnet wird, und/oder das
b. jeder Gussform oder jedem Typ von Gussformen jeweils spezifisch eine Rohmaterialart und/oder eine Rohmaterialmenge pro Füllung zugeordnet wird und dass jede Gussform zu Beginn eines jeden Prozessdurchlaufs mit Rohmaterial der spezifisch zugeordneten Rohmaterialart in der spezifisch zugeordneten Rohmaterialmenge, insbesondere automatisch, befüllt wird, und/oder dass
c. jedem Aufnahmekörper (1) individuell ein Satz von Bearbeitungsparametern zugeordnet wird und die Aufnahmekörper (1) in den Bearbeitungsvorrichtungen (2), denen sie zugeführt werden, unter Einhaltung der jeweils spezifisch zugeordneten Bearbeitungsparameter bearbeitet werden, und/oder dass
d. jedem Aufnahmekörper (1) individuell ein Satz von Bearbeitungsparametern zugeordnet und in einer Datenbank abgelegt wird, und/oder dass
e. jedem Aufnahmekörper (1) individuell ein Satz von Bearbeitungsparametern zugeordnet und an oder in dem Aufnahmekörper (1) in maschinenlesbarer Form hinterlegt wird,
f. jedem Aufnahmekörper (1) individuell ein Satz von Bearbeitungsparametern zugeordnet wird und die Aufnahmekörper (1) in den Bearbeitungsvorrichtungen (2), denen sie zugeführt werden, unter Einhaltung der jeweils spezifisch zugeordneten Bearbeitungsparameter bearbeitet werden, wobei es so ist, dass ein Bearbeitungsparameter eine Rotationsdauer betrifft und/oder dass ein Bearbeitungsparameter eine Ofentemperatur betrifft und/oder dass ein Bearbeitungsparameter eine obere Arbeitstemperatur der Gussform betrifft und/oder dass ein Bearbeitungsparameter eine untere Arbeitstemperatur der Gussform betrifft und/oder dass ein Bearbeitungsparameter eine Strömungsgeschwindigkeit eines Heißluftstromes zum Heizen einer Gussform betrifft und/oder dass ein Bearbeitungsparameter eine Strömungsgeschwindigkeit eines Kaltluftstromes zum Kühlen einer Gussform betrifft und/oder dass ein Bearbeitungsparameter eine Heißlufttemperatur betrifft und/oder dass ein Bearbeitungsparameter eine Kaltlufttemperatur betrifft und/oder dass ein Bearbeitungsparameter ein Rotationsbewegungsmuster betrifft und/oder dass ein Bearbeitungsparameter eine Heizzeit betrifft und/oder dass ein Bearbeitungsparameter eine Abkühlzeit betrifft und/oder dass ein Bearbeitungsparameter eine Sollausrichtung für eine Entnahme des Rotationsgussprodukts (28) betrifft und/oder ein Bearbeitungsparameter eine Sollausrichtung für ein Beschicken der Gussform betrifft und/oder dass ein Bearbeitungsparameter eine Rohmaterialeigenschaft, insbesondere eine Rohmaterialmenge oder eine Rohmaterialfarbe oder eine Rohmaterialart, betrifft.

6. Verfahren nach einem der Ansprüche 1 bis 5, **dadurch gekennzeichnet, dass**
a. die Aufnahmekörper (1) unstetig und/oder asynchron zwischen den Bearbeitungsvorrichtungen (2) transportiert werden, und/oder dass
b. die Aufnahmekörper (1) zwischen den Bearbeitungsvorrichtungen (2) nicht in einem kontinuierlichen Förderstrom transportiert werden, und/oder dass
c. die Aufnahmekörper (1) zwischen den Bearbeitungsvorrichtungen (2) mittels eines, insbesondere automatischen, Förderers (8) transportiert werden, und/oder dass
d. die Aufnahmekörper (1) vor dem Entnehmen des Rotationsgussproduktes (28), insbesondere automatisch, in einer bestimmten Ausrichtung orientiert werden, und/oder dass
e. die Aufnahmekörper (1) als aus zwei Kugelhälften zusammengesetzte kugelförmige Aufnahmekörper (1) ausgebildet sind und vor dem Entnehmen des Rotationsgussproduktes (28), insbesondere automatisch, jeweils so ausgerichtet werden, dass eine Trennebene zwischen den zwei Kugelhälften des jeweiligen kugelförmigen Aufnahmekörpers (1) horizontal angeordnet ist.

7. Anlage, insbesondere automatische Anlage, zur Ausführung eines Verfahrens nach einem der Ansprüche 1 bis 6, oder Anlage, insbesondere automatische Anlage, zum Herstellen von Rotationsgussprodukten (28), die mehrere kugelförmige Aufnahmekörper (1) jeweils ohne eigenen Rotationsantrieb beinhaltet, von denen jeder zumindest eine mit Rohmaterial beschickbare Gussform aufweist, **gekennzeichnet durch**
a. mehrere unabhängig voneinander betreibbare und unabhängig voneinander arbeitende, insbesondere auf zwei unterschiedliche horizontale Ebenen verteilte, Bearbeitungsvorrichtungen (2), wobei jede Bearbeitungsvorrichtung (2) dazu ausgebildet ist, zumindest einen der nachfolgenden Herstellungsschritte a bis d auszuführen:
i. Beschicken wenigstens der Gussform mit einem Rohmaterial, in einer Bearbeitungsvorrichtung (2), die als Beschickungsstation (5) ausgebildet ist,
ii. Heizen des Aufnahmekörpers (1) oder wenigstens der Gussform des Aufnahmekörpers (1), während der Aufnahmekörper rotiert wird, in einer Bearbeitungsvorrichtung (2), die als Rotationsstation (3) ausgebildet ist,
iii. Kühlen des Aufnahmekörpers (1) oder wenigstens der Gussform in einer Bearbeitungsvorrichtung (2), die als Kühlstation (4) ausgebildet ist,
iv. Entnehmen des Rotationsgussproduktes aus der Gussform, in einer Bearbeitungsvorrichtung (2), die als Entnahmestation (6) ausgebildet ist und
wobei mehrere Bearbeitungsvorrichtungen (2) zeitlich parallel oder zeitlich überlappend arbeiten, die als Rotationsstationen (3) ausgebildet sind,
b. und einen Förderer (8), der die kugelförmigen Aufnahmekörper(1), jeweils samt Inhalt und jeweils ohne Rotationsantrieb, voneinander unabhängig und unmittelbar, den Bearbeitungsvorrichtungen (2) zuführt und jeweils nach einem Bearbeitungsvorgang von den Bearbeitungsvorrichtungen (2) empfängt, wobei **durch** den Förderer (8) jeweils der Bearbeitungsvorrichtung (2), die gerade einen Herstellungsschritt abgeschlossen hat, der kugelförmige Aufnahmekörper (1) samt seinem Inhalt und ohne Rotationsantrieb entnommen wird und danach einer beliebigen für den jeweils nächsten der Herstellungsschritte i bis iv geeigneten und gerade freien Bearbeitungsvorrichtung (2) zugeführt wird.

8. Anlage nach Anspruch 7, **dadurch gekennzeichnet, dass** die Anlage wenigstens eines der Merkmale aufweist:
a. mehrere Bearbeitungsvorrichtungen (2) zeitlich parallel oder zeitlich überlappend arbeiten, die als Kühlstationen (4) ausgebildet sind,
b. mehrere Bearbeitungsvorrichtungen (2) zeitlich parallel oder zeitlich überlappend arbeiten, die als Beschickungsstationen (5) ausgebildet sind,
c. mehrere Bearbeitungsvorrichtungen (2) zeitlich parallel oder zeitlich überlappend arbeiten, die als Entnahmestationen (6) ausgebildet sind.

9. Anlage nach Anspruch 7 oder 8, **dadurch gekennzeichnet, dass**
a. wenigstens einer der Aufnahmekörper (1), insbesondere jeder der Aufnahmekörper(1), wenigstens eine Aufnahme für wenigstens eine Gussform aufweist, und/oder dass
b. wenigstens die Beschickungsstation (5) als automatische Beschickungsstation (5) zum Beschicken wenigstens einer Gussform eines Aufnahmekörpers (1) mit einem Rohmaterial ausgebildet ist, und/oder dass
c. wenigstens eine der Bearbeitungsvorrichtungen (2) als Kühlstation (4) zum Kühlen und gleichzeitigem Rotieren eines Aufnahmekörpers(1), und/oder wenigstens der Gussform eines Aufnahmekörpers (1) ausgebildet ist, und/oder dass
d. die Rotationsstation (3) zusätzlich auch dazu ausgebildet ist, jeweils einen der Aufnahmekörper (1) zu empfangen und diesen oder wenigstens dessen Gussform zu kühlen, und/oder dass
e. die Kühlstation (4) zusätzlich auch dazu ausgebildet ist, jeweils einen der Aufnahmekörper (1) zu empfangen, die Gussform für einen Heizvorgang mit Energie zu beaufschlagen und den Aufnahmekörper (1) zu rotieren, oder dass die Kühlstation (4) ausschließlich dazu ausgebildet ist, jeweils einen der Aufnahmekörper (1) zu empfangen und diesen oder wenigstens dessen Gussform zu kühlen, und/oder dass
f. wenigstens eine, insbesondere von der Rotationsstation (3) oder der Kühlstation (4) verschiedene, der Bearbeitungsvorrichtungen (2) zusätzlich als, insbesondere automatische, Beschickungsstation (5) ausgebildet ist, und/oder dass
g. die Beschickungsstation (5) dazu ausgebildet und angeordnet ist, jeweils einen der Aufnahmekörper (1) von dem Förderer (8) zu empfangen und die Gussform des empfangenen Aufnahmekörpers (1) mit einem Rohmaterial zu befüllen, und/oder dass
h. jeder Gussform oder jedem Typ von Gussformen jeweils spezifisch eine Rohmaterialart und/oder eine Rohmaterialmenge pro Füllung zugeordnet sind und dass die Beschickungsstation (5) dazu ausgebildet und angeordnet ist, jeweils einen der Aufnahmekörper (1) von dem Förderer (8) zu empfangen und die Gussform des empfangenen Aufnahmekörpers (1) mit Rohmaterial der spezifisch zugeordneten Rohmaterialart in der spezifisch zugeordneten Rohmaterialmenge zu befüllen, und/oder dass
i. eine, insbesondere von der Rotationsstation (3) oder der Kühlstation (4) verschiedene, der Bearbeitungsvorrichtungen (2) zusätzlich als, insbesondere automatische, Entnahmestation (6) zum Entnehmen eines Rotationsgussproduktes (28) aus der jeweiligen Gussform des empfangenen Aufnahmekörpers (1) ausgebildet ist, und/oder dass
j. wenigstens eine, insbesondere von der Rotationsstation (3) oder der Kühlstation (4) verschiedene, der Bearbeitungsvorrichtungen (2) sowohl als, insbesondere automatische, Beschickungsstation (5), als auch als Entnahmestation (6) ausgebildet ist.

10. Anlage nach einem der Ansprüche 7 bis 9, **dadurch gekennzeichnet, dass** die Anlage eine Schleusenstation aufweist, die dazu ausgebildet und angeordnet ist, einen der Aufnahmekörper (1) von dem Förderer (8) zu empfangen und/oder einen anderen Aufnahmekörper (1) an den Förderer (8) zu übergeben und die es ermöglicht, Aufnahmekörper(1), insbesondere während eines laufenden Betriebs, aus einen Bearbeitungsprozess auszuschleusen und/oder Aufnahmekörper (1), insbesondere während eines laufenden Betriebs, in einen Bearbeitungsprozess einzuschleusen.

11. Anlage nach einem der Ansprüche 7 bis 10, **dadurch gekennzeichnet, dass**
a. der Förderer (8) einen Linearförderer aufweist,
b. der Förderer (8) eine Förderbahn aufweist und/oder dass
c. der Förderer (8) eine Kugelrollbahn (17) aufweist und/oder dass
d. der Förderer (8) wenigstens einen Transportarm (15, 16) aufweist, und/oder dass
e. der Förderer (8) wenigstens einen drehbar gelagerten Transportarm aufweist,
f. der Förderer (8) wenigstens einen Greifer zum Greifen eines der Aufnahmekörper (1) aufweist, und/oder dass
g. der Förderer (8) eine Bajonettkupplung zum Ankoppeln an eine Gegenkupplung eines Aufnahmekörpers (1) aufweist, und/oder dass
h. der Förderer (8) als Roboter (19) ausgebildet ist, und/oder dass
i. der Förderer (8) als Industrieroboter ausgebildet ist, und/oder dass
j. der Förderer als Unstetigförderer ausgebildet ist und/oder dass
k. der Förderer (8) die Aufnahmekörper (1) asynchron zwischen den Bearbeitungsvorrichtungen (2) transportiert.

12. Anlage nach einem der Ansprüche 7 bis 11, **dadurch gekennzeichnet, dass**
a. die Anlage wenigstens eine, insbesondere automatische, Ausrichtvorrichtung aufweist, die dazu ausgebildet und angeordnet ist, einen der Aufnahmekörper (1) in einer bestimmten und/oder bestimmbaren Ausrichtung zu orientieren, und/oder dass
b. die Anlage wenigstens eine, insbesondere automatische, Ausrichtvorrichtung aufweist, die dazu ausgebildet und angeordnet ist, die Trennebene zwischen zwei Kugelhälften jeweils eines kugelförmigen Aufnahmekörpers (1) horizontal auszurichten, und/oder dass
c. die Anlage wenigstens eine, insbesondere automatische, Ausrichtvorrichtung aufweist, die dazu ausgebildet und angeordnet ist, einen der Aufnahmekörper (1) in einer bestimmten und/oder bestimmbaren Ausrichtung zu orientieren und die Teil des Förderers (8) ist oder unmittelbar an dem Förderer (8) angeordnet ist, oder die Teil einer Entnahmestation (6) ist oder unmittelbar an einer Entnahmestation (6) angeordnet ist.

13. Anlage nach einem der Ansprüche 7 bis 12, **dadurch gekennzeichnet, dass**
a. jedem Aufnahmekörper (1) individuell ein Satz von Bearbeitungsparametern zugeordnet ist und/oder zuordenbar ist und die Bearbeitungsvorrichtungen (2) die Bearbeitungsparameter, die dem ihr jeweils übergebenen Aufnahmekörper (1) zugeordnet sind, bei der jeweiligen Bearbeitung einhalten, und/oder dass
b. jedem Aufnahmekörper (1) ein spezifischer eigener Code und individuell ein Satz von Bearbeitungsparametern zugeordnet ist und/oder zuordenbar ist, wobei der jeweilige Satz von Bearbeitungsparametern in einer Datenbank abgelegt und über den Code abrufbar ist, und/oder das
c. jedem Aufnahmekörper (1) individuell ein Satz von Bearbeitungsparametern zugeordnet ist, der an oder in dem Aufnahmekörper(1), insbesondere in einem Transponder oder in Form eines maschinenlesbaren Codes, hinterlegt ist, und/oder dass
d. jedem Aufnahmekörper (1) individuell ein Satz von Bearbeitungsparametern zugeordnet ist und/oder zuordenbar ist und die Bearbeitungsvorrichtungen (2) die Bearbeitungsparameter, die dem ihr jeweils übergebenen Aufnahmekörper (1) zugeordnet sind, bei der jeweiligen Bearbeitung einhalten, wobei es so ist, dass ein Bearbeitungsparameter eine Ofentemperatur betrifft und/oder dass ein Bearbeitungsparameter eine obere Arbeitstemperatur der Gussform betrifft und/oder dass ein Bearbeitungsparameter eine untere Arbeitstemperatur der Gussform betrifft und/oder dass ein Bearbeitungsparameter eine Strömungsgeschwindigkeit eines Heißluftstromes zum Heizen einer Gussform betrifft und/oder dass ein Bearbeitungsparameter eine Strömungsgeschwindigkeit eines Kaltluftstromes zum Kühlen einer Gussform betrifft und/oder dass ein Bearbeitungsparameter eine Heißlufttemperatur betrifft und/oder dass ein Bearbeitungsparameter eine Kaltlufttemperatur betrifft und/oder dass ein Bearbeitungsparameter ein Rotationsbewegungsmuster betrifft und/oder dass ein Bearbeitungsparameter eine Heizzeit betrifft und/oder dass ein Bearbeitungsparameter eine Abkühlzeit betrifft und/oder dass ein Bearbeitungsparameter eine Sollausrichtung für eine Entnahme des Rotationsgussprodukts (28) betrifft und/oder ein Bearbeitungsparameter eine Sollausrichtung für ein Beschicken der Gussform betrifft und/oder dass ein Bearbeitungsparameter eine Rohmaterialeigenschaft, insbesondere eine Rohmaterialmenge oder eine Rohmaterialfarbe oder eine Rohmaterialart, betrifft.

## Claims

1. Method for producing rotomoulded products (28), **characterized by** the simultaneous use of a plurality of spherical receptacle members (1), each without a dedicated rotary drive, each of which containing at least one moulding die that is suppliable with raw material, and by the simultaneous use of a plurality of processing devices (2) which are operated in a mutually independent manner, each for carrying out at least one of a plurality of production steps, using in each case one of the spherical receptacle members (1), wherein the productions steps to be carried out with each of the spherical receptacle members (1) comprise:
i. supplying at least the moulding die with a raw material, in a processing device (2) which is configured as a supply station (5);
ii. heating the receptacle member (1) or at least the moulding die of the receptacle member (1) while the receptacle member is rotated, in a processing device (2) which is configured as a rotating station (3);
iii. cooling the receptacle member (1) or at least the moulding die in a processing device (2) which is configured as a cooling station (4);
iv. retrieving the rotomoulded product from the moulding die, in a processing device (2) which is configured as a retrieval station (6); and wherein
a plurality of processing devices (2) which are configured as rotating stations (3) are used in a temporally parallel or temporally overlapping manner,
and wherein the spherical receptacle member (1) conjointly with the content thereof and without the rotary drive is in each case retrieved from the processing device (2) which has just terminated a processing step, said spherical receptacle member (1) thereafter being fed to an arbitrary processing device (2) that is immediately vacant and suitable for the respective next one of processing steps i to iv.

2. Method according to Claim 1, **characterized in that** the method comprises at least one of the following features:
a. using a plurality of processing devices (2) which are configured as cooling stations (4) in a temporally parallel or temporally overlapping manner;
b. using a plurality of processing devices (2) which are configured as supply stations (5) in a temporally parallel or temporally overlapping manner;
c. using a plurality of processing devices (2) which are configured as retrieval stations (6) in a temporally parallel or temporally overlapping manner.

3. Method according to Claim 1 or 2, **characterized in that**
a. the steps i to iv are carried out in a temporally overlapping manner and/or in a cyclically repeating manner using a multiplicity of receptacle members (1); and/or **in that**
b. while one receptacle member (1) is just being processed in one processing device (2), other receptacle members (1) are supplied to other processing devices (2) and/or are retrieved from other processing devices (2), and/or other receptacle members (1) are processed in other processing devices (2).

4. Method according to one of Claims 1 to 3, **characterized in that**
a. the rotation stations (3) are used exclusively as rotation stations (3), or **in that** one of the rotation stations (3) is additionally also configured to function as a cooling station (4) and is utilized as a cooling station (4) when a vacant cooling station (4) is immediately required; and/or **in that**
b. the cooling station (4) is used exclusively as a cooling station (4), or **in that** the cooling station (4) is additionally also configured to function as a rotation station (3) and is utilized as a rotation station (3) when a vacant rotation station (3) is immediately required; and/or **in that**
c. the supply station (5) is additionally also configured to function as a retrieval station (6) and is utilized as a retrieval station (6) when a vacant retrieval station (6) is required after a cooling step; and/or **in that**
d. the retrieval station (6) is additionally also configured to function as a supply station (5) and is utilized as a supply station (5); and/or in that
e. a single processing device (2) is used as a supply station (5) as well as a retrieval station (6), and moreover no further supply station (5) and no further retrieval station (6) are used.

5. Method according to one of Claims 1 to 4, **characterized in that**
a. each moulding die, or each moulding die type, is in each case specifically assigned a raw material type and/or a raw material quantity per filling; and/or **in that**
b. each moulding die, or each moulding die type, is in each case specifically assigned a raw material type and/or a raw material quantity per filling, and **in that** each moulding die at the beginning of each process run is, in particular automatically, filled with raw material of the specifically assigned raw material type in the specifically assigned raw material quantity; and/or **in that**
c. each receptacle member (1) is individually assigned a set of processing parameters, and the receptacle members (1) in the processing devices (2) to which the former are supplied are processed while adhering to the respective processing parameters specifically assigned; and/or **in that**
d. each receptacle member (1) is individually assigned a set of processing parameters, the latter being stored in a database; and/or **in that**
e. each receptacle member (1) is individually assigned a set of processing parameters, the latter being stored in a machine-readable form on or in the receptacle member (1);
f. each receptacle member (1) is individually assigned a set of processing parameters, and the receptacle member (1) in the processing devices (2) to which the former are supplied are processed while adhering to the respective processing parameters specifically assigned, wherein a processing parameter relates to a rotation duration, and/or a processing parameter relates to a furnace temperature, and/or a processing parameter relates to an upper operating temperature of the moulding die, and/or a processing parameter relates to a lower operating temperature of the moulding die, and/or a processing parameter relates to a flow velocity of a hot airflow for heating a moulding die, and/or a processing parameter relates to a flow velocity of a cold airflow for cooling a moulding die, and/or a processing parameter relates to a hot air temperature, and/or a processing parameter relates to a cold air temperature, and/or a processing parameter relates to a rotational movement pattern, and/or a processing parameter relates to a heating time, and/or a processing parameter relates to a cooling time, and/or a processing parameter relates to a nominal alignment for a retrieval of the rotomoulded product (28), and/or a processing parameter relates to a nominal alignment for supplying the moulding die, and/or a processing parameter relates to a raw material property, in particular a raw material quantity, or a raw material colour, or a raw material type.

6. Method according to one of Claims 1 to 5, **characterized in that**
a. the receptacle members (1) are transported intermittently and/or asynchronously between the processing devices (2); and/or **in that**
b. the receptacle members (1) are not transported in a continuous conveying stream between the processing devices (2); and/or **in that**
c. the receptacle members (1) are transported between the processing devices (2) by means of an in particular automatic conveyor (8); and/or **in that**
d. the receptacle members (1) prior to the retrieval of the rotomoulded product (28) are in particular automatically oriented in a specific alignment; and/or **in that**
e. the receptacle members (1) are configured as spherical receptacle members (1) assembled from two sphere-halves, and prior to the retrieval of the rotomoulded product (28) are in each case in particular automatically aligned such that a separation plane between two sphere-halves of the respective spherical receptacle member (1) is horizontally disposed.

7. Installation, in particular automatic installation, for carrying out a method according to one of Claims 1 to 6, or installation, in particular automatic installation, for producing rotomoulded products (28), which contains a plurality of spherical receptacle members (1) each without a dedicated rotary drive, each of which having at least one moulding die that is suppliable with raw material, **characterized by**
a. a plurality of processing devices (2) that are operable in a mutually independent manner and operate in mutually independent manner and are in particular distributed on two different horizontal planes, wherein each processing device (2) is configured to carry out at least one of the following production steps a to d:
i. suppling at least the moulding die with a raw material in a processing device (2) which is configured as a supply station (5);
ii. heating the receptacle member (1) or at least the moulding die of the receptacle member (1) while the receptacle member is rotated, in a processing device (2) which is configured as a rotation station (3);
iii. cooling the receptacle member (1) or at least the moulding die in a processing device (2) which is configured as a cooling station (4);
iv. retrieving the rotomoulded product from the moulding die, in a processing device (2) which is configured as a retrieval station (6); and
wherein a plurality of processing devices (2) which are configured as rotation stations (3) operate in a temporally parallel or temporally overlapping manner;
b. and a conveyor (8) which supplies the spherical receptacle members (1), in each case conjointly with the content and in each case without the rotary drive, in a mutually independent manner directly to the processing devices (2) and in each case after a processing procedure receives said spherical receptacle members (1) from the processing devices (2), wherein the spherical receptacle member (1), conjointly with the content thereof and without the rotary drive, is in each case retrieved by the conveyor from the processing device (2) which has just terminated a processing step, and thereafter is supplied to an arbitrary processing device (2) that is immediately vacant and suitable for the respective next one of the production steps i to iv.

8. Installation according to Claim 7, **characterized in that** the installation has at least one of the following features:
a. a plurality of processing devices (2) which are configured as cooling stations (4) operate in a temporally parallel or temporally overlapping manner;
b. a plurality of processing devices (2) which are configured as supply stations (5) operate in a temporally parallel or temporally overlapping manner.
c. a plurality of processing devices (2) which are configured as retrieval stations (6) operate in a temporally parallel or temporally overlapping manner.

9. Installation according to Claim 7 or 8, **characterized in that**
a. at least one of the receptacle members (1), in particular each of the receptacle members (1), has at least one receptacle for at least one moulding die; and/or **in that**
b. at least the supply station (5) is configured as an automatic supply station (5) for supplying at least one moulding die of a receptacle member (1) with a raw material; and/or **in that**
c. at least one of the processing devices (2) is configured as a cooling station (4) for cooling and simultaneously rotating a receptacle member (1) and/or at least the moulding die of a receptacle member (1); and/or **in that**
d. the rotation station (3) is additionally also configured to receive in each case one of the receptacle members (1) and to cool the latter or at least the moulding die thereof; and/or **in that**
e. the cooling station (4) is additionally also configured to receive in each case one of the receptacle members (1), to impinge the moulding die with energy for a heating procedure, and to rotate the receptacle member (1); or **in that** the cooling station (4) is configured exclusively to receive in each case one of the receptacle members (1) and to cool the latter or at least the moulding die thereof; and/or **in that**
f. at least one of the processing devices (2), in particular one of the processing devices (2) that is different from the rotation station (3) or the cooling station (4), is additionally configured as an in particular automatic supply station(5); and/or **in that**
g. the supply station (5) is configured and disposed to receive in each case one of the receptacle members (1) from the conveyor (8) and to fill the moulding die of the receptacle member (1) received with a raw material; and/or **in that**
h. each moulding die, or each moulding die type, is in each case specifically assigned a raw material type and/or a raw material quantity per filling, and **in that** the supply station (5) is configured and disposed to receive in each case one of the receptacle members (1) from the conveyor (8), and to fill the moulding die of the receptacle member (1) received with raw material of the specifically assigned raw material type in the specifically assigned raw material quantity; and/or **in that**
i. one of the processing devices (2), in particular one of the processing devices (2) that is different from the rotation station (3) or the cooling station (4), is additionally configured as an in particular automatic retrieval station (6) for retrieving a rotomoulded product (28) for the respective moulding die of the receptacle member (1) received; and/or **in that**
j. at least one of the processing devices (2), in particular one of the processing devices (2) that is different from the rotation station (3) or the cooling station (4), is configured as an in particular automatic supply station (5) as well as a retrieval station (6).

10. Installation according to one of Claims 7 to 9, **characterized in that** the installation has a lock station which is configured and disposed to receive one of the receptacle members (1) from the conveyor (8) and/or to transfer another receptacle member (1) to the conveyor (8), and which enables receptacle members (1), in particular during an ongoing operation, to be moved through the lock out of a processing procedure, and/or receptacle members (1), in particular during an ongoing operation, to be moved through the lock into a processing procedure.

11. Installation according to one of Claims 7 to 10, **characterized in that**
a. the conveyor (8) has a linear conveyor;
b. the conveyor (8) has a conveying track; and/or **in that**
c. the conveyor (8) has a roller ball track (17); and/or **in that**
d. the conveyor (8) has at least one transport arm (15, 16); and/or **in that**
e. the conveyor (8) has at least one rotatably mounted transport arm;
f. the conveyor (8) has at least one gripper for gripping one of the receptacle members (1); and/ or **in that**
g. the conveyor (8) has a bayonet coupling for coupling to a counter coupling of a receptacle member (1); and/or **in that**
h. the conveyor (8) is configured as a robot (19); and/or **in that**
i. the conveyor (8) is configured as an industrial robot; and/or **in that**
j. the conveyor is configured as an intermittent conveyor; and/or **in that**
k. the conveyor (8) transports the receptacle members (1) asynchronously between the processing devices (2).

12. Installation according to one of Claims 7 to 11, **characterized in that**
a. the installation has at least one, in particular automatic, alignment device which is configured and disposed to orient one of the receptacle members (1) in a specific and/or specifiable alignment; and/or **in that**
b. the installation has at least one, in particular automatic, alignment device which is configured and disposed to horizontally align the separation plane between two sphere-halves of in each case one spherical receptacle member (1); and/or **in that**
c. the installation has at least one, in particular automatic, alignment device which is configured and disposed to orient one of the receptacle members (1) in a specific and/or specifiable alignment and is part of the conveyor (8), or is disposed directly on the conveyor (8), or which is part of a retrieval station (6), or is disposed directly on a retrieval station (6).

13. Installation according to one of Claims 7 to 12, **characterized in that**
a. each receptacle member (1) is individually assigned and/or assignable a set of processing parameters, and the processing devices (2) in the respective processing adhere to the processing parameters which are assigned to the receptacle member (1) transferred in each case to said processing devices (2), and/or **in that**
b. each receptacle member (1) is assigned and/or assignable a specific dedicated code and individually a set of processing parameters, wherein the respective set of processing parameters is stored in a database and is retrievable by way of the code, and/or **in that**
c. each receptacle member (1) is individually assigned a set of processing parameters which is stored on or in the receptacle member (1), in particular in a transponder or in the form of a machine-readable code; and/or **in that**
d. each receptacle member (1) is individually assigned and/or assignable a set of processing parameters, and the processing devices (2) in the respective processing adhere to the processing parameters which are assigned to the receptacle member (1) transferred in each case to said processing devices (2), wherein a processing parameter relates to a furnace temperature, and/or a processing parameter relates to an upper operating temperature of the moulding die, and/or a processing parameter relates to a lower operating temperature of the moulding die, and/or a processing parameter relates to a flow velocity of a hot airflow for heating a moulding die, and/or a processing parameter relates to a flow velocity of a cold airflow for cooling a moulding die, and/or a processing parameter relates to a hot air temperature, and/or a processing parameter relates to a cold air temperature, and/or a processing parameter relates to a rotational movement pattern, and/or a processing parameter relates to a heating time, and/or a processing parameter relates to a cooling time, and/or a processing parameter relates to a nominal alignment for a retrieval of the rotomoulded product (28), and/or a processing parameter relates to a nominal alignment for supplying the moulding die, and/or a processing parameter relates to a raw material property, in particular a raw material quantity, or a raw material colour, or a raw material type.

## Revendications

1. Procédé de fabrication de produits moulés par rotation (28), **caractérisé par** l'utilisation simultanée de plusieurs corps d'accueil (1) de forme sphérique respectivement sans mécanisme d'entraînement en rotation propre, parmi lesquels chacun contient au moins un moule pouvant être chargé avec de la matière première, et par l'utilisation simultanée de plusieurs dispositifs de traitement (2), lesquels sont mis en fonctionnement indépendamment les uns des autres, respectivement pour exécuter au moins l'une de plusieurs étapes de fabrication avec respectivement l'un des corps d'accueil (1) de forme sphérique, les étapes de fabrication à exécuter avec chacun des corps d'accueil (1) de forme sphérique comprenant :
i. chargement d'au moins le moule avec une matière première, dans un dispositif de traitement (2) qui est réalisé sous la forme d'une station de chargement (5),
ii. chauffage du corps d'accueil (1) ou au moins du moule du corps d'accueil (1), pendant que le corps d'accueil est mis en rotation dans un dispositif de traitement (2) qui est réalisé sous la forme d'une station de rotation (3),
iii. refroidissement du corps d'accueil (1) ou au moins du moule dans un dispositif de traitement (2) qui est réalisé sous la forme d'une station de refroidissement (4),
iv. prélèvement du produit moulé par rotation hors du moule, dans un dispositif de traitement (2) qui est réalisé sous la forme d'une station de prélèvement (6) et
plusieurs dispositifs de traitement (2) étant utilisés parallèlement dans le temps ou en chevauchement dans le temps, lesquels sont réalisés sous la forme de stations de rotation (3),
et le dispositif de traitement (2) qui vient de terminer une étape de fabrication étant respectivement retiré du corps d'accueil (1) de forme sphérique, avec son contenu et sans le mécanisme d'entraînement en rotation, et ensuite acheminé à un dispositif de traitement (2) quelconque, approprié pour la prochaine des étapes de fabrication i à iv respective et actuellement libre.

2. Procédé selon la revendication 1, **caractérisé en ce que** le procédé comprend au moins l'une des caractéristiques suivantes :
a. utilisation de plusieurs dispositifs de traitement (2) parallèlement dans le temps ou en chevauchement dans le temps, lesquels sont réalisés sous la forme de stations de refroidissement (4),
b. utilisation de plusieurs dispositifs de traitement (2) parallèlement dans le temps ou en chevauchement dans le temps, lesquels sont réalisés sous la forme de stations de chargement (5),
c. utilisation de plusieurs dispositifs de traitement (2) parallèlement dans le temps ou en chevauchement dans le temps, lesquels sont réalisés sous la forme de stations de prélèvement (6).

3. Procédé selon la revendication 1 ou 2, **caractérisé en ce que**
a. les étapes i à iv sont exécutées en se chevauchant dans le temps et/ou étant répétées cycliquement avec une pluralité de corps d'accueil (1), et/ou **en ce que**
b. pendant qu'un corps d'accueil (1) est en train d'être traité dans un dispositif de traitement (2), d'autres corps d'accueil (1) sont acheminés à et/ou prélevés d'autres dispositifs de traitement (2), et/ou d'autres corps d'accueil (1) sont traités dans d'autres dispositifs de traitement (2).

4. Procédé selon l'une des revendications 1 à 3, **caractérisé en ce que**
a. les stations de rotation (3) sont utilisées exclusivement en tant que stations de rotation (3) ou **en ce que** l'une des stations de rotation (3) est en plus également configurée pour faire office de station de refroidissement (4) et utilisée en tant que station de refroidissement (4) lorsqu'une station de refroidissement (4) libre est justement nécessaire, et/ou en ce que
b. la station de refroidissement (4) est utilisée exclusivement en tant que station de refroidissement (4) ou **en ce que** la station de refroidissement (4) est en plus également configurée pour faire office de station de rotation (3) et utilisée en tant que station de rotation (3) lorsqu'une station de rotation (3) libre est justement nécessaire, et/ou **en ce que**
c. la station de chargement (5) est en plus également configurée pour faire office de station de prélèvement (6) et utilisée en tant que station de prélèvement (6) lorsqu'une station de prélèvement (6) libre est nécessaire après une étape de refroidissement, et/ou **en ce que**
d. la station de prélèvement (6) est en plus également configurée pour faire office de station de chargement (5) et utilisée en tant que station de chargement (5), et/ou en ce que
e. un dispositif de traitement (2) unique est utilisé aussi bien comme station de chargement (5) que comme station de prélèvement (6) et aucune station de chargement (5) supplémentaire et aucune station de prélèvement (6) supplémentaire n'est utilisée à part lui.

5. Procédé selon l'une des revendications 1 à 4, **caractérisé en ce que**
a. un type de matière première et/ou une quantité de matière première par charge est attribué respectivement spécifiquement à chaque moule ou chaque type de moule, et/ou **en ce que**
b. un type de matière première et/ou une quantité de matière première par charge est attribué respectivement spécifiquement à chaque moule ou chaque type de moule et **en ce que** chaque moule, au début de chaque cycle de processus, est rempli, notamment automatiquement, avec de la matière première du type de matière première spécifiquement attribué dans la quantité de matière première spécifiquement attribuée, et/ou **en ce que**
c. un jeu de paramètres de traitement est attribué individuellement à chaque corps d'accueil (1) et les corps d'accueil (1) dans les dispositifs de traitement (2) auxquels ils sont acheminés sont traités en respectant les paramètres de traitement respectivement attribués spécifiquement, et/ou **en ce que**
d. un jeu de paramètres de traitement est attribué individuellement à chaque corps d'accueil (1) et stocké dans une base de données, et/ou **en ce que**
e. un jeu de paramètres de traitement est attribué individuellement à chaque corps d'accueil (1) et déposé sur ou dans le corps d'accueil (1) sous une forme lisible par machine,
f. un jeu de paramètres de traitement est attribué individuellement à chaque corps d'accueil (1) et les corps d'accueil (1) dans les dispositifs de traitement (2) auxquels ils sont acheminés sont traités en respectant les paramètres de traitement respectivement attribués spécifiquement, ceci étant tel qu'un paramètre de traitement concerne une durée de rotation et/ou qu'un paramètre de traitement concerne une température de four et/ou qu'un paramètre de traitement concerne une température de travail supérieure du moule et/ou qu'un paramètre de traitement concerne une température de travail inférieure du moule et/ou qu'un paramètre de traitement concerne une vitesse d'écoulement d'un flux d'air chaud servant à chauffer un moule et/ou qu'un paramètre de traitement concerne une vitesse d'écoulement d'un flux d'air froid servant à refroidir un moule et/ou qu'un paramètre de traitement concerne une température d'air chaud et/ou qu'un paramètre de traitement concerne une température d'air froid et/ou qu'un paramètre de traitement concerne un modèle de mouvement de rotation et/ou qu'un paramètre de traitement concerne un temps de chauffage et/ou qu'un paramètre de traitement concerne un temps de refroidissement et/ou qu'un paramètre de traitement concerne une orientation de consigne pour un prélèvement du produit moulé par rotation (28) et/ou qu'un paramètre de traitement concerne une orientation de consigne pour un chargement du moule et/ou qu'un paramètre de traitement concerne une propriété de matière première, notamment une quantité de matière première ou une couleur de matière première ou un type de matière première.

6. Procédé selon l'une des revendications 1 à 5, **caractérisé en ce que**
a. les corps d'accueil (1) sont transportés de manière discontinue et/ou asynchrone entre les dispositifs de traitement (2), et/ou **en ce que**
b. les corps d'accueil (1) ne sont pas transportés en un flux de convoyage continu entre les dispositifs de traitement (2), et/ou **en ce que**
c. les corps d'accueil (1) sont transportés au moyen d'un convoyeur (8), notamment automatique, entre les dispositifs de traitement (2), et/ou **en ce que**
d. les corps d'accueil (1) sont orientés, notamment automatiquement, selon une orientation déterminée avant le prélèvement du produit moulé par rotation (28), et/ou en ce que
e. les corps d'accueil (1) sont réalisés sous la forme de corps d'accueil (1) sphériques assemblés à partir de deux moitiés de sphère et sont respectivement orientés, notamment automatiquement, avant le prélèvement du produit moulé par rotation (28) de telle sorte qu'un plan de séparation est disposé horizontalement entre les deux moitiés de sphère du corps d'accueil (1) sphérique respectif.

7. Installation, notamment installation automatique, destinée à mettre en œuvre un procédé selon l'une des revendications 1 à 6, ou installation, notamment installation automatique, destinée à fabriquer des produits moulés par rotation (28), qui comprend plusieurs corps d'accueil (1) de forme sphérique respectivement sans mécanisme d'entraînement en rotation propre, parmi lesquels chacun contient au moins un moule pouvant être chargé avec de la matière première, **caractérisée par**
a. plusieurs dispositifs de traitement (2) pouvant fonctionner indépendamment les uns des autres, notamment répartis sur des plans horizontaux différents, chaque dispositif de traitement (2) étant configuré pour exécuter au moins l'une des étapes de fabrication a à d suivantes :
i. chargement d'au moins le moule avec une matière première, dans un dispositif de traitement (2) qui est réalisé sous la forme d'une station de chargement (5),
ii. chauffage du corps d'accueil (1) ou au moins du moule du corps d'accueil (1), pendant que le corps d'accueil est mis en rotation dans un dispositif de traitement (2) qui est réalisé sous la forme d'une station de rotation (3),
iii. refroidissement du corps d'accueil (1) ou au moins du moule dans un dispositif de traitement (2) qui est réalisé sous la forme d'une station de refroidissement (4),
iv. prélèvement du produit moulé par rotation hors du moule, dans un dispositif de traitement (2) qui est réalisé sous la forme d'une station de prélèvement (6) et
plusieurs dispositifs de traitement (2) fonctionnant parallèlement dans le temps ou en chevauchement dans le temps, lesquels sont réalisés sous la forme de stations de rotation (3),
b. et un convoyeur (8), qui achemine les corps d'accueil (1) de forme sphérique, respectivement avec leur contenu et respectivement sans le mécanisme d'entraînement en rotation, indépendamment les uns des autres et directement, aux dispositifs de traitement (2) et les réceptionne des dispositifs de traitement (2) respectivement après une opération de traitement, le dispositif de traitement (2) qui vient de terminer une étape de fabrication étant respectivement retiré du corps d'accueil (1) de forme sphérique, avec son contenu et sans le mécanisme d'entraînement en rotation, par le convoyeur (8) et ensuite acheminé par ce dernier à un dispositif de traitement (2) quelconque, approprié pour la prochaine des étapes de fabrication i à iv respective et actuellement libre.

8. Installation selon la revendication 7, **caractérisée en ce que** l'installation comprend au moins l'une des caractéristiques suivantes :
a. plusieurs dispositifs de traitement (2) fonctionnent parallèlement dans le temps ou en chevauchement dans le temps, lesquels sont réalisés sous la forme de stations de refroidissement (4),
b. plusieurs dispositifs de traitement (2) fonctionnent parallèlement dans le temps ou en chevauchement dans le temps, lesquels sont réalisés sous la forme de stations de chargement (5),
c. plusieurs dispositifs de traitement (2) fonctionnent parallèlement dans le temps ou en chevauchement dans le temps, lesquels sont réalisés sous la forme de stations de prélèvement (6).

9. Installation selon la revendication 7 ou 8, **caractérisée en ce que**
a. au moins l'un des corps d'accueil (1), notamment chacun des corps d'accueil (1), possède au moins un logement pour au moins un moule, et/ou **en ce que**
b. au moins la station de chargement (5) est réalisée sous la forme d'une station de chargement (5) automatique destinée au chargement d'au moins un moule d'un corps d'accueil (1) avec une matière première, et/ou **en ce que**
c. au moins l'un des dispositifs de traitement (2) est réalisé sous la forme d'une station de refroidissement (4) destinée à refroidir et à mettre simultanément en rotation un corps d'accueil (1) et/ou au moins le moule d'un corps d'accueil (1), et/ou **en ce que**
d. la station de rotation (3) est en plus également configurée pour réceptionner respectivement l'un des corps d'accueil (1) et refroidir celui-ci ou au moins son moule, et/ou **en ce que**
e. la station de refroidissement (4) est en plus également configurée pour réceptionner respectivement l'un des corps d'accueil (1), alimenter le moule en énergie pour une opération de chauffage et mettre le corps d'accueil (1) en rotation, ou **en ce que** la station de refroidissement (4) est configurée exclusivement pour réceptionner respectivement l'un des corps d'accueil (1) et refroidir celui-ci ou au moins son moule, et/ou **en ce que**
f. au moins l'une des stations de traitement (2), notamment différente de la station de rotation (3) ou la station de refroidissement (4), est en plus réalisée sous la forme d'une station de chargement (5), notamment automatique, et/ou **en ce que**
g. la station de chargement (5) est configurée et disposée de manière à réceptionner respectivement l'un des corps d'accueil (1) du convoyeur (8) et remplir le moule du corps d'accueil (1) réceptionné avec une matière première, et/ou **en ce que**
h. un type de matière première et/ou une quantité de matière première par charge est attribué respectivement spécifiquement à chaque moule ou chaque type de moule et **en ce que** la station de chargement (5) est configurée et disposée de manière à réceptionner respectivement l'un des corps d'accueil (1) du convoyeur (8) et remplir le moule du corps d'accueil (1) réceptionné avec de la matière première du type de matière première attribué respectivement dans la quantité de matière première attribuée respectivement, et/ou **en ce que**
i. l'un des dispositifs de traitement (2), notamment différent de la station de rotation (3) ou de la station de refroidissement (4), est en plus réalisé sous la forme d'une station, de prélèvement (6), notamment automatique, destinée au prélèvement d'un produit moulé par rotation (28) hors du moule respectif du corps d'accueil (1) réceptionné, et/ou **en ce que**
j. au moins l'un des dispositifs de traitement (2), notamment différent de la station de rotation (3) ou de la station de refroidissement (4), est réalisé à la fois comme station de chargement (5), notamment automatique, et comme station de prélèvement (6)

10. Installation selon l'une des revendications 7 à 9, **caractérisée en ce que** l'installation possède une station formant sas, laquelle est configurée et disposée pour réceptionner l'un des corps d'accueil (1) du convoyeur (8) et/ou transférer un autre corps d'accueil (1) au convoyeur (8) et qui permet d'extraire des corps d'accueil (1) d'un processus de traitement, notamment pendant un fonctionnement en cours et/ou d'introduire des corps d'accueil (1) dans un processus de traitement, notamment pendant un fonctionnement en cours.

11. Installation selon l'une des revendications 7 à 10, **caractérisée en ce que**
a. le convoyeur (8) possède un convoyeur linéaire,
b. le convoyeur (8) possède une bande transporteuse, et/ou **en ce que**
c. le convoyeur (8) possède une bande de roulement à billes (17), et/ou **en ce que**
d. le convoyeur (8) possède au moins un bras de transport (15, 16), et/ou **en ce que**
e. le convoyeur (8) possède au moins un bras de transport monté rotatif,
f. le convoyeur (8) possède au moins un organe de préhension destiné à saisir l'un des corps d'accueil (1), et/ou **en ce que**
g. le convoyeur (8) possède un accouplement à baïonnette destiné à être accouplé à un accouplement homologue d'un corps d'accueil (1), et/ou **en ce que**
h. le convoyeur (8) est réalisé sous la forme d'un robot (19), et/ou **en ce que**
i. le convoyeur (8) est réalisé sous la forme d'un robot industriel, et/ou **en ce que**
j. le convoyeur est réalisé sous la forme d'un convoyeur discontinu, et/ou **en ce que**
k. le convoyeur (8) transporte les corps d'accueil (1) de manière asynchrone entre les dispositifs de traitement (2) .

12. Installation selon l'une des revendications 7 à 11, **caractérisée en ce que**
a. l'installation possède un dispositif d'orientation, notamment automatique, lequel est configuré et disposé pour orienter l'un des corps d'accueil (1) selon une orientation déterminée et/ou déterminable, et/ou **en ce que**
b. l'installation possède un dispositif d'orientation, notamment automatique, lequel est configuré et disposé pour orienter horizontalement le plan de séparation entre deux moitiés de sphère respectivement d'un corps d'accueil (1), et/ou **en ce que**
c. l'installation possède un dispositif d'orientation, notamment automatique, lequel est configuré et disposé pour orienter l'un des corps d'accueil (1) selon une orientation déterminée et/ou déterminable et qui est une partie du convoyeur (8) ou est disposé directement au niveau du convoyeur (8), ou qui est une partie d'une station de prélèvement (6) ou est disposé directement au niveau d'une station de prélèvement (6).

13. Installation selon l'une des revendications 7 à 12, **caractérisée en ce que**
a. un jeu de paramètres de traitement est attribué et/ou est attribuable individuellement à chaque corps d'accueil (1) et les dispositifs de traitement (2), lors du traitement respectif, respectent les paramètres de traitement qui sont attribués aux corps d'accueil (1) qui leurs sont respectivement transférés, et/ou **en ce que**
b. un code propre spécifique et un jeu de paramètres de traitement individuel est attribué et/ou est attribuable à chaque corps d'accueil (1), le jeu de paramètres de traitement respectif étant stocké dans une base de données et pouvant être invoqué par le biais du code, et/ou **en ce que**
c. un jeu de paramètres de traitement est attribué individuellement à chaque corps d'accueil (1), lequel est déposé sur ou dans le corps d'accueil (1), notamment dans un transpondeur ou sous une forme lisible par machine, et/ou **en ce que**
d. un jeu de paramètres de traitement est attribué et/ou est attribuable individuellement à chaque corps d'accueil (1) et les dispositifs de traitement (2), lors du traitement respectif, respectent les paramètres de traitement qui sont attribués aux corps d'accueil (1) qui leurs sont respectivement transférés, ceci étant tel qu'un paramètre de traitement concerne une température de four et/ou qu'un paramètre de traitement concerne une température de travail supérieure du moule et/ou qu'un paramètre de traitement concerne une température de travail inférieure du moule et/ou qu'un paramètre de traitement concerne une vitesse d'écoulement d'un flux d'air chaud servant à chauffer un moule et/ou qu'un paramètre de traitement concerne une vitesse d'écoulement d'un flux d'air froid servant à refroidir un moule et/ou qu'un paramètre de traitement concerne une température d'air chaud et/ou qu'un paramètre de traitement concerne une température d'air froid et/ou qu'un paramètre de traitement concerne un modèle de mouvement de rotation et/ou qu'un paramètre de traitement concerne un temps de chauffage et/ou qu'un paramètre de traitement concerne un temps de refroidissement et/ou qu'un paramètre de traitement concerne une orientation de consigne pour un prélèvement du produit moulé par rotation (28) et/ou qu'un paramètre de traitement concerne une orientation de consigne pour un chargement du moule et/ou qu'un paramètre de traitement concerne une propriété de matière première, notamment une quantité de matière première ou une couleur de matière première ou un type de matière première.
